# EUROPÄISCHE PATENTSCHRIFT

(11) **EP 4 665 586 B1**
(45) Veröffentlichungstag und Bekanntmachung des Hinweises auf die Patenterteilung: **02.12.2026**
(21) Anmeldenummer: 24720440.7
(22) Anmeldetag: 16.04.2024
(51) Int. Cl.: B41F 33/00, B41F 11/02, G01N 21/86

(54) **MASCHINE ZUR HANDHABUNG VON BOGEN MIT EINER INSPEKTIONSEINRICHTUNG UND EINER SCHWENKBAREN BELEUCHTUNGSEINRICHTUNG**
MACHINE FOR HANDLING SHEETS, COMPRISING AN INSPECTION DEVICE AND A PIVOTAL ILLUMINATION DEVICE
MACHINE DE MANIPULATION DE FEUILLES COMPRENANT UN DISPOSITIF D'INSPECTION ET UN DISPOSITIF D'ÉCLAIRAGE PIVOTANT

(30) Priorität: 04.05.2023 DE 102023111581
(43) Veröffentlichungstag der Anmeldung: 24.12.2025
(73) Patentinhaber: Koenig & Bauer AG, 97080 Würzburg (DE)
(72) Erfinder: DIEHM, Tobias, 97877 Wertheim (DE); MÜLLER, Michael, 97753 Karlstadt (DE)
(74) Vertreter: Koenig & Bauer AG
(86) Internationale Anmeldenummer: PCT/EP2024/060259
(87) Internationale Veröffentlichungsnummer: WO 2024/227593

(56) Entgegenhaltungen:
- EP-A1- 4 043 217
- DE-A1- 102020 106 154
- US-A1- 2008 066 638
- US-A1- 2019 224 963

## Beschreibung

Die Erfindung betrifft eine Maschine zur Handhabung von Bogen mit einer Inspektionseinrichtung und einer Beleuchtungseinrichtung gemäß dem Oberbegriff des Anspruches 1.

Durch die WO 2007/006706 A1 ist eine Maschine zur Handhabung von Bogen bekannt, die zumindest eine Inspektionseinrichtung zur insbesondere optischen Inspektion von Bogen aufweist.

Durch die WO 2018/167064 A1 sind Druckmaschinen mit jeweiligen Bogen-Simultandruckeinheiten bekannt, wobei über Spiegel arbeitende Inspektionseinrichtungen im Zusammenhang mit teilbaren und verschiebbaren Maschinengestellen offenbart sind.

Durch die DE 10 2011 012 807 A1 ist eine Maschine zur Handhabung von Bogen bekannt, die eine Inspektionseinrichtung und eine um eine Schwenkachse schwenkbar angeordnete Beleuchtungseinrichtung aufweist.

Durch die DE 196 04 241 A1 ist eine Maschine zur Handhabung von Bogen bekannt, die eine Inspektionseinrichtung und zwei Beleuchtungseinrichtungen aufweist.

Durch die DE 10 2008 006 462 A1 und die DE 601 33 443 T2 ist jeweils eine Maschine zur Handhabung von Bogen bekannt, die eine Inspektionseinrichtung mit einer in einer Querrichtung bewegbaren Sensoreinrichtung aufweist.

Durch die EP 2 202 075 A2 ist eine Druckmaschine bekannt, deren Inspektionseinrichtung nur einen relativ schmalen Bereich eines Bedruckstoffs erfasst und dafür in einer Querrichtung bewegbar ist, um über mehrere Messungen die gesamte Breite des Bedruckstoffs zu erfassen.

Durch die US 2019/0224963 A1 ist eine Maschine bekannt, mittels Drucke und Nummerierungen auf Bogen aufgebracht werden können, die reflektierende Abschnitte aufweisen, wobei die Maschine eine Inspektionseinrichtung mit Kamera und schwenkbarer Beleuchtungseinrichtung aufweist, um eine Ausleuchtung zu optimieren, wobei die Schwenkachse parallel zu einer Querrichtung verläuft und den Inspektionsbereich der Inspektionseinrichtung schneidet.

Durch die EP 4 043 217 A1 ist eine Druckmaschine mit einer Kamera mit Beleuchtungseinrichtung zur Bogeninspektion bekannt, wobei Kamera und Beleuchtungseinrichtung gemeinsam um eine Schwenkachse schwenkbar angeordnet sind, um sie aus einer Inspektionsposition in eine Wartungsposition zu bewegen.

Durch die DE 10 2020 106 154 A1 ist eine Bogendruckmaschine bekannt, die eine Ausrichteinrichtung zum Ausrichten von magnetischen Partikeln in auf Bogen aufgetragener Druckfarbe aufweist und die eine Inspektionseinrichtung aufweist, die zwei Beleuchtungseinrichtungen aufweist, die zum Beleuchten mit Licht mit unterschiedlichen Wellenlängen ausgebildet ist.

Durch die US 2008/0066638 A1 ist eine Maschine zur Inspektion von Wertpapierdrucken sowohl durch Reflektion als auch durch Transmission bekannt.

Der Erfindung liegt die Aufgabe zugrunde, eine Maschine zur Handhabung von Bogen mit einer Inspektionseinrichtung und einer Beleuchtungseinrichtung zu schaffen.

Die Aufgabe wird erfindungsgemäß durch die Merkmale des Anspruches 1 gelöst.

Eine Maschine zur Handhabung und bevorzugt auch zur Bearbeitung von Bogen, weist zumindest eine Inspektionseinrichtung zur insbesondere optischen Inspektion von Bogen auf. Die Maschine weist zumindest ein Bogentransportmittel auf, das einen Abschnitt eines für einen Transport von Bogen vorgesehenen Transportwegs festlegt. Dieser Abschnitt umfasst einen Inspektionsbereich. Die Inspektionseinrichtung weist zumindest eine insbesondere optische Sensoreinrichtung auf, die auf den Inspektionsbereich ausgerichtet angeordnet ist. Der Inspektionsbereich ist insbesondere ein Teilabschnitt desjenigen Abschnitts des Transportwegs, der von dem Bogentransportmittel festgelegt ist und von der Sensoreinrichtung erfassbar ist.

In einer Weiterbildung ist zumindest eine Führungseinrichtung der zumindest einen Sensoreinrichtung angeordnet, die einen für eine Bewegung der zumindest einen Sensoreinrichtung vorgesehenen Sensorstellweg festlegt, der sich von der Inspektionsposition zumindest bis zu einer als Wartungsposition der zumindest einen Sensoreinrichtung ausgebildeten ersten Abstellposition der zumindest einen Sensoreinrichtung erstreckt. Der Sensorstellweg erstreckt sich zumindest zwischen der Inspektionsposition und der ersten Abstellposition insbesondere ausschließlich orthogonal zu einer Querrichtung. Dadurch kann ein relevanter Bereich der Sensoreinrichtung ausreichend freigelegt werden, ohne die Sensoreinrichtung unnötig weit bewegen zu müssen. Dies erlaubt auch, Leitungsverbindungen für die Abstellbewegung verbunden zu lassen. In einer alternativen oder zusätzlichen Weiterbildung zeichnet sich die Maschine bevorzugt dadurch aus, dass zumindest eine Anschlussleitung der zumindest einen Sensoreinrichtung derart angeordnet ist, dass sie eine Bewegung der zumindest einen Sensoreinrichtung zwischen der Inspektionsposition und der ersten Abstellposition erlaubt, während eine durch diese jeweilige Anschlussleitung sichergestellte leitungstechnische Verbindung aufrecht erhalten bleibt. In einer alternativen oder zusätzlichen Weiterbildung zeichnet sich die Maschine bevorzugt dadurch aus, dass die zumindest eine Sensoreinrichtung in ihrer ersten Abstellposition für eine Reinigung zugänglich und/oder aus der Maschine entnehmbar ist.

In einer alternativen oder zusätzlichen Weiterbildung zeichnet sich die Maschine bevorzugt dadurch aus, dass sich der Sensorstellweg auf einer Länge von zumindest 10 cm, bevorzugt zumindest 20 cm, weiter bevorzugt zumindest 30 cm, noch weiter bevorzugt zumindest 40 cm und noch weiter bevorzugt zumindest 50 cm insbesondere ausschließlich orthogonal zu der Querrichtung erstreckt.

In einer alternativen oder zusätzlichen Weiterbildung zeichnet sich die Maschine bevorzugt dadurch aus, dass der Sensorstellweg zumindest teilweise gekrümmt ist und/oder dass die zumindest eine Sensoreinrichtung in ihrer ersten Abstellposition in eine andere Richtung weist, als in ihrer Inspektionsposition. Dann kann der Sensorstellweg möglichst kurz gehalten werden und dennoch eine Zugänglichkeit optimiert werden.

In einer alternativen oder zusätzlichen Weiterbildung zeichnet sich die Maschine bevorzugt dadurch aus, dass die zumindest eine Führungseinrichtung der zumindest einen Sensoreinrichtung zumindest zwei Schienen aufweist, durch die der Sensorstellweg festgelegt ist. Dies erlaubt eine besonders präzise Bewegung der Sensoreinrichtung.

In einer alternativen oder zusätzlichen Weiterbildung zeichnet sich die Maschine bevorzugt dadurch aus, dass zumindest ein erstes Halteelement derart angeordnet ist, dass bei in der Inspektionsposition angeordneter Sensoreinrichtung ein Umschalten einer Einrichtung und/oder ein Überwinden einer Haltekraft notwendig ist, um die Sensoreinrichtung aus dieser Inspektionsposition heraus bewegen zu können. Dies erlaubt eine hohe Inspektionsqualität. In einer alternativen oder zusätzlichen Weiterbildung zeichnet sich die Maschine bevorzugt dadurch aus, dass die zumindest eine Sensoreinrichtung als optische Sensoreinrichtung und/oder als Kamera und/oder als Zeilenkamera ausgebildet ist. In einer alternativen oder zusätzlichen Weiterbildung zeichnet sich die Maschine bevorzugt dadurch aus, dass das Bogentransportmittel als Rotationstransportkörper ausgebildet ist und/oder dass das Bogentransportmittel als Saugtrommel ausgebildet ist. Dies erlaubt eine hohe Inspektionsqualität.

Die Inspektionseinrichtung weist zumindest eine erste Beleuchtungseinrichtung auf, die auf den Inspektionsbereich ausgerichtet angeordnet ist. Die erste Beleuchtungseinrichtung ist um eine erste Schwenkachse schwenkbar angeordnet, zum Wechsel der erster Beleuchtungseinrichtung zwischen unterschiedlichen Beleuchtungspositionen. Dies erlaubt eine Inspektion von Druckbildern, deren Erscheinungsbild variabel ist bzw. vom Blickwinkel und/oder Beleuchtungswinkel abhängig ist. Beispielsweise können entsprechende Druckbilder teilweise erst dann ausreichend präzise inspiziert werden, wenn die Richtung der Beleuchtung und die Richtung der Erfassung aufeinander abgestimmt sind. Insbesondere ist die erste Beleuchtungseinrichtung bevorzugt unabhängig von der zumindest einen Sensoreinrichtung um die erste Schwenkachse schwenkbar angeordnet. Die erste Schwenkachse ist bevorzugt parallel zu einer Querrichtung orientiert. Erfindungsgemäß schneidet die erste Schwenkachse den Inspektionsbereich oder weist die erste Schwenkachse einen kleinsten Abstand zu dem Inspektionsbereich auf, der höchstens 20 mm beträgt, weiter bevorzugt höchstens 10 mm und noch weiter bevorzugt höchstens 5 mm.

In einer alternativen oder zusätzlichen Weiterbildung zeichnet sich die Maschine bevorzugt dadurch aus, dass die erste Beleuchtungseinrichtung in einem von zwei Endlagen begrenzten ersten Winkelbereich um die erste Schwenkachse schwenkbar angeordnet ist und dass dieser erste Winkelbereich sich über zumindest 5° erstreckt, weiter bevorzugt zumindest 8° und noch weiter bevorzugt zumindest 10°.

In einer alternativen oder zusätzlichen Weiterbildung zeichnet sich die Maschine bevorzugt dadurch aus, dass eine Abstellführungseinrichtung der ersten Beleuchtungseinrichtung angeordnet ist, die einen Stellweg der ersten Beleuchtungseinrichtung festlegt, entlang dem die zumindest eine erste Beleuchtungseinrichtung zwischen zumindest einer Beleuchtungsposition der zumindest einen ersten Beleuchtungseinrichtung und zumindest einer Wartungsposition der zumindest einen ersten Beleuchtungseinrichtung bewegbar ist. Der Stellweg der ersten Beleuchtungseinrichtung ist bevorzugt linear und/oder verläuft bevorzugt parallel zu der Querrichtung. In einer alternativen oder zusätzlichen Weiterbildung zeichnet sich die Maschine bevorzugt dadurch aus, dass die jeweilige Beleuchtungsposition der zumindest einen ersten Beleuchtungseinrichtung und die Wartungsposition der zumindest einen ersten Beleuchtungseinrichtung sich in ihrer auf die Querrichtung bezogenen Lage unterscheiden. Dadurch ist eine Entnahme der Beleuchtungseinrichtung auch bei beengten Platzverhältnissen ermöglicht.

Die zumindest eine erste Beleuchtungseinrichtung ist bevorzugt zur Beleuchtung des Inspektionsbereichs mit zumindest mehrheitlich gerichtetem Licht ausgebildet. Dies erlaubt eine präzise Inspektion. Erfindungsgemäß zeichnet sich die Maschine dadurch aus, dass die Inspektionseinrichtung zumindest eine zweite Beleuchtungseinrichtung aufweist, die auf den Inspektionsbereich ausgerichtet angeordnet ist. Die zumindest eine zweite Beleuchtungseinrichtung ist zur Beleuchtung des Inspektionsbereichs mit zumindest mehrheitlich diffusem Licht ausgebildet. Dies erlaubt es, eine insgesamt größere Helligkeit und damit eine verbesserte Inspektionsqualität zu erreichen.

In einer alternativen oder zusätzlichen Weiterbildung zeichnet sich die Maschine bevorzugt dadurch aus, dass die Inspektionseinrichtung in ihrer Arbeitsposition zwischen der ihr zugeordneten zumindest einen ersten Beleuchtungseinrichtung und der ihr zugeordneten zumindest einen zweiten Beleuchtungseinrichtung angeordnet ist. Dann sind beide Beleuchtungseinrichtungen möglichst nahe an der Sensoreinrichtung anordenbar.

In einer alternativen oder zusätzlichen Weiterbildung zeichnet sich die Maschine bevorzugt dadurch aus, dass die zumindest eine erste Beleuchtungseinrichtung als Einrichtung zum Aussenden von elektromagnetischer Strahlung im sichtbaren Bereich und/oder als Einrichtung zum Aussenden von elektromagnetischer Strahlung im Infrarotbereich und/oder als Einrichtung zum Aussenden von elektromagnetischer Strahlung im ultravioletten Bereich ausgebildet ist. Bevorzugt wird eine gezielte Umschaltbarkeit zwischen diesen Bereichen. Dies erlaubt eine vielfältige Nutzbarkeit der Inspektionseinrichtung.

In einer alternativen oder zusätzlichen Weiterbildung zeichnet sich die Maschine bevorzugt dadurch aus, dass die Maschine zumindest zwei solcher Inspektionseinrichtungen aufweist und dass eine erste Inspektionseinrichtung zur Inspektion einer ersten Seite eines jeweiligen Bogens angeordnet ist und dass eine zweite Inspektionseinrichtung zur Inspektion einer der ersten Seite des jeweiligen Bogens gegenüberliegenden zweiten Seite des jeweiligen Bogens angeordnet ist.

Die Maschine ist bevorzugt als Bogendruckmaschine und/oder als Wertpapier-Bogendruckmaschine ausgebildet. Bevorzugt weist die Maschine eine Stapelauslage und/oder eine Mehrfachstapelauslage auf. Bevorzugt weist die Maschine zumindest einen Bogenanleger auf. In einer alternativen oder zusätzlichen Weiterbildung zeichnet sich die Maschine bevorzugt dadurch aus, dass die Maschine zumindest eine Siebdruckeinheit aufweist. Erfindungsgemäß zeichnet sich die Maschine dadurch aus, dass die Maschine zumindest eine Ausrichteinrichtung zum Ausrichten von in einem optisch variablen und auf dem jeweiligen Bogen aufgebrachten Beschichtungsmittel enthaltenen und für eine optische Variabilität verantwortlichen Partikeln aufweist. In einer alternativen oder zusätzlichen Weiterbildung zeichnet sich die Maschine bevorzugt dadurch aus, dass die Ausrichteinrichtung zumindest einen Ausrichtzylinder aufweist, der insbesondere als Rotationstransportkörper ausgebildet ist und/oder als magnetisch wirksamer Ausrichtzylinder ausgebildet ist. Insbesondere bei solchen Druckfarben sind entsprechend angepasste und flexible Beleuchtungsmöglichkeiten von Vorteil. Bevorzugt wird unter dem Begriff einer Bogendruckmaschine auch eine Bogen-Nummerier-Maschine und/oder eine Bogen-Flexo-Druckmaschine und/oder eine Bogenlackiermaschine verstanden.

In einer alternativen oder zusätzlichen Weiterbildung zeichnet sich die Maschine bevorzugt dadurch aus, dass die Maschine eine maximale Arbeitsbreite von zumindest 50 cm aufweist und/oder dass die zumindest eine optische Sensoreinrichtung eine Erfassungsbreite aufweist, die zumindest 80 % der maximalen Arbeitsbreite beträgt.

In einer alternativen oder zusätzlichen Weiterbildung zeichnet sich die Maschine bevorzugt dadurch aus, dass sie als Bogendruckmaschine ausgebildet ist und zumindest eine als Bogen-Simultandruckeinheit ausgebildete Bogendruckeinheit aufweist, die einen ersten Sammelzylinder und einen zweiten Sammelzylinder aufweist, die direkt miteinander in Kontakt stehend und/oder direkt miteinander zusammenwirkend angeordnet sind und die jeweils eine Rotationsachse aufweisen, wobei eine Achsenebene eine Ebene ist, die sowohl die Rotationsachse des ersten Sammelzylinders als auch die Rotationsachse des zweiten Sammelzylinders enthält. Eine Referenzebene ist bevorzugt eine Ebene, die zumindest eine Rotationsachse eines solchen Sammelzylinders enthält und die eine horizontale Flächennormale aufweist. Bevorzugt sind diese zwei Sammelzylinder so angeordnet, dass der Schnittwinkel zwischen der Achsenebene einerseits und der Referenzebene andererseits höchstens 45°, weitert bevorzugt höchstens 20°, noch weiter bevorzugt höchstens 5° und noch weiter bevorzugt höchstens 0,5° beträgt.

In einer alternativen oder zusätzlichen Weiterbildung zeichnet sich die Bogendruckmaschine bevorzugt dadurch aus, dass sie zumindest eine der zumindest einen Bogen-Simultandruckeinheit nachgeordnete Simultandruck-Inspektionseinrichtung zur Inspektion von insbesondere mittels der zumindest einen Bogen-Simultandruckeinheit bedruckten Bogen aufweist und dass die Bogendruckmaschine zumindest ein der Simultandruck-Inspektionseinrichtung zugeordnetes Bogentransportmittel aufweist, das einen Abschnitt eines für einen Transport von Bogen vorgesehenen Transportwegs festlegt. Dieser Abschnitt umfasst bevorzugt einen Inspektionsbereich der Simultandruck-Inspektionseinrichtung. Die Simultandruck-Inspektionseinrichtung weist bevorzugt zumindest eine insbesondere optische Sensoreinrichtung auf, die in einer Simultan-Inspektionsposition insbesondere direkt auf den Inspektionsbereich der Simultandruck-Inspektionseinrichtung ausgerichtet angeordnet ist. Die zumindest eine Sensoreinrichtung ist bevorzugt als Kamera und/oder als Zeilenkamera ausgebildet. Das entsprechende Bogentransportmittel ist bevorzugt als rotierbares Bogentransportmittel ausgebildet, insbesondere als Saugtrommel. Das entsprechende Bogentransportmittel bildet bevorzugt mit einem der Sammelzylinder eine erste Übergabestelle. Bevorzugt ist zumindest eine Führungseinrichtung der zumindest einen Sensoreinrichtung der Simultandruck-Inspektionseinrichtung angeordnet, die einen für eine Bewegung der zumindest einen Sensoreinrichtung der Simultandruck-Inspektionseinrichtung vorgesehenen Sensorstellweg festlegt, der sich von der Simultan-Inspektionsposition zumindest bis zu einer als Wartungsposition ausgebildeten Abstellposition der Sensoreinrichtung der Simultandruck-Inspektionseinrichtung erstreckt. Dieser Sensorstellweg erstreckt sich bevorzugt zumindest zwischen der Simultan-Inspektionsposition und der als Wartungsposition ausgebildeten Abstellposition der Sensoreinrichtung der Simultandruck-Inspektionseinrichtung linear und parallel zu einer Querrichtung, weiter bevorzugt ausschließlich linear.

In einer alternativen oder zusätzlichen Weiterbildung zeichnet sich die Bogendruckmaschine bevorzugt dadurch aus, dass die Simultandruck-Inspektionseinrichtung zumindest eine Beleuchtungseinrichtung aufweist, die in einer Beleuchtungsposition insbesondere direkt auf den Inspektionsbereich der Simultandruck-Inspektionseinrichtung ausgerichtet angeordnet ist. Weiter bevorzugt ist zumindest eine Abstellführungseinrichtung der zumindest einen Beleuchtungseinrichtung der Simultandruck-Inspektionseinrichtung angeordnet, die einen für eine Bewegung der zumindest einen Beleuchtungseinrichtung der Simultandruck-Inspektionseinrichtung vorgesehenen Beleuchtungsstellweg festlegt, der sich von der Beleuchtungsposition zumindest bis zu einer als Wartungsposition ausgebildeten Abstellposition der Beleuchtungseinrichtung der Simultandruck-Inspektionseinrichtung erstreckt. Dieser Beleuchtungsstellweg erstreckt sich bevorzugt zumindest zwischen der Beleuchtungsposition und der Abstellposition der Beleuchtungseinrichtung der Simultandruck-Inspektionseinrichtung linear und parallel zu der Querrichtung, weiter bevorzugt ausschließlich linear.

In einer alternativen oder zusätzlichen Weiterbildung zeichnet sich die insbesondere als Bogendruckmaschine ausgebildete Maschine bevorzugt dadurch aus, dass die Maschine, insbesondere die Bogendruckmaschine eine maximale Arbeitsbreite von zumindest 50 cm aufweist und dass die zumindest eine Sensoreinrichtung der Simultandruck-Inspektionseinrichtung eine Erfassungsbreite aufweist, die zumindest 80 % der maximalen Arbeitsbreite beträgt.

In einer alternativen oder zusätzlichen Weiterbildung zeichnet sich die Bogendruckmaschine bevorzugt dadurch aus, dass sich die Beleuchtungsposition der zumindest einen Beleuchtungseinrichtung der Simultandruck-Inspektionseinrichtung und die Wartungsposition der zumindest einen Beleuchtungseinrichtung der Simultandruck-Inspektionseinrichtung in ihrer auf die Querrichtung bezogenen Lage insbesondere um eine Länge unterscheiden, die zumindest der Arbeitsbreite der Bogendruckmaschine und/oder zumindest der lichten Weite der Bogendruckmaschine entspricht, insbesondere zumindest einer Summe aus der lichten Weite und einer Abmessung einer Gestellseitenwand des Gestells der Bogendruckmaschine in der Querrichtung im Bereich der Bogen-Simultandruckeinheit. In einer alternativen oder zusätzlichen Weiterbildung zeichnet sich die Bogendruckmaschine bevorzugt dadurch aus, dass die Abstellführungseinrichtung der zumindest einen Beleuchtungseinrichtung der Simultandruck-Inspektionseinrichtung eine Schiene und/oder mehrere Rollenelemente aufweist.

In einer alternativen oder zusätzlichen Weiterbildung zeichnet sich die Bogendruckmaschine bevorzugt dadurch aus, dass sich die Inspektionsposition der Sensoreinrichtung der Simultandruck-Inspektionseinrichtung und die als Wartungsposition ausgebildete Abstellposition der Sensoreinrichtung der Simultandruck-Inspektionseinrichtung in ihrer auf die Querrichtung bezogenen Lage insbesondere um eine Länge unterscheiden, die zumindest der Arbeitsbreite der Bogendruckmaschine und/oder zumindest der lichten Weite der Bogendruckmaschine entspricht, insbesondere zumindest einer Summe aus der lichten Weite und einer Abmessung einer Gestellseitenwand des Gestells der Bogendruckmaschine in der Querrichtung im Bereich der Bogen-Simultandruckeinheit. In einer alternativen oder zusätzlichen Weiterbildung zeichnet sich die Bogendruckmaschine bevorzugt dadurch aus, dass die Führungseinrichtung der Sensoreinrichtung der Simultandruck-Inspektionseinrichtung eine Schiene und/oder mehrere Rollenelemente aufweist.

In einer alternativen oder zusätzlichen Weiterbildung zeichnet sich die Bogendruckmaschine bevorzugt dadurch aus, dass die Bogen-Simultandruckeinheit genau vier Formzylinder aufweist, von denen genau zwei mit dem ersten Sammelzylinder direkt in Kontakt stehend und/oder direkt zusammenwirkend angeordnet sind und von denen genau zwei andere mit dem zweiten Sammelzylinder direkt in Kontakt stehend und/oder direkt zusammenwirkend angeordnet sind. Weiter bevorzugt zeichnet sich die Bogendruckmaschine zusätzlich dadurch aus, dass zumindest ein Farbwerk je Formzylinder angeordnet ist, das zumindest einen jeweiligen Farbvorrat aufweist und dass für jeden Farbvorrat zumindest eine Vorratsschnittebene festgelegt ist, die sowohl diesen Farbvorrat schneidet als auch die Rotationsachse desjenigen Formzylinders enthält, der mit demjenigen Farbwerk zusammenwirkt und/oder zusammenzuwirken fähig angeordnet ist, das diesen Farbvorrat enthält und dass ein Schnittwinkel zwischen der Referenzebene einerseits und zumindest einer solchen Vorratsschnittebene des jeweiligen Farbvorrats andererseits höchstens 45°, weiter bevorzugt höchstens 35°, noch weiter bevorzugt höchstens 25° und noch weiter bevorzugt höchstens 20° beträgt.

Entlang des für den Transport von Bogen vorgesehenen Transportwegs ist an jeder Stelle eine Transportrichtung festgelegt, insbesondere als diejenige Richtung, die an der entsprechenden Stelle des vorgesehenen Transportwegs tangential zu diesem und parallel zur an dieser Stelle vorgesehenen Bewegung der Bogen orientiert ist. Die Querrichtung ist eine an jeder Stelle des für den Transport von Bogen vorgesehenen Transportwegs zur Transportrichtung orthogonale horizontale Richtung. Das zumindest eine Bogentransportmittel ist bevorzugt als rotierbares Bogentransportmittel ausgebildet, dessen Rotationsachse sich in der Querrichtung erstreckt.

Ausführungsbeispiele der Erfindung sind in den Zeichnungen dargestellt und werden im Folgenden näher beschrieben.

Es zeigen:

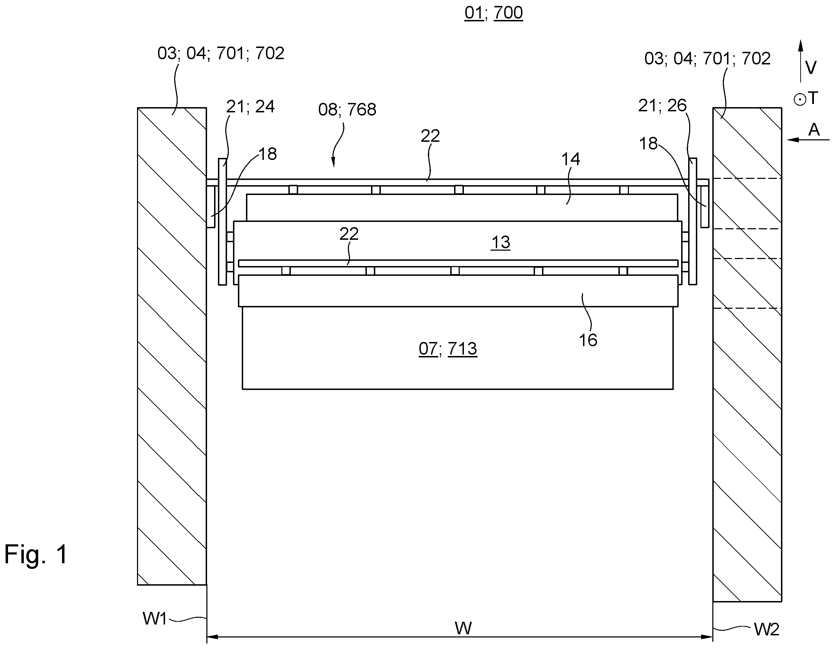

- Fig. 1: eine schematische Darstellung eines Schnittes durch ein Gestell einer Maschine, wobei ein Rotationstransportkörper sowie eine in dessen Umgebung angeordnete Inspektionseinrichtung mit Sensoreinrichtung, Beleuchtungseinrichtungen und Führungseinrichtungen als Ansicht zu sehen sind;

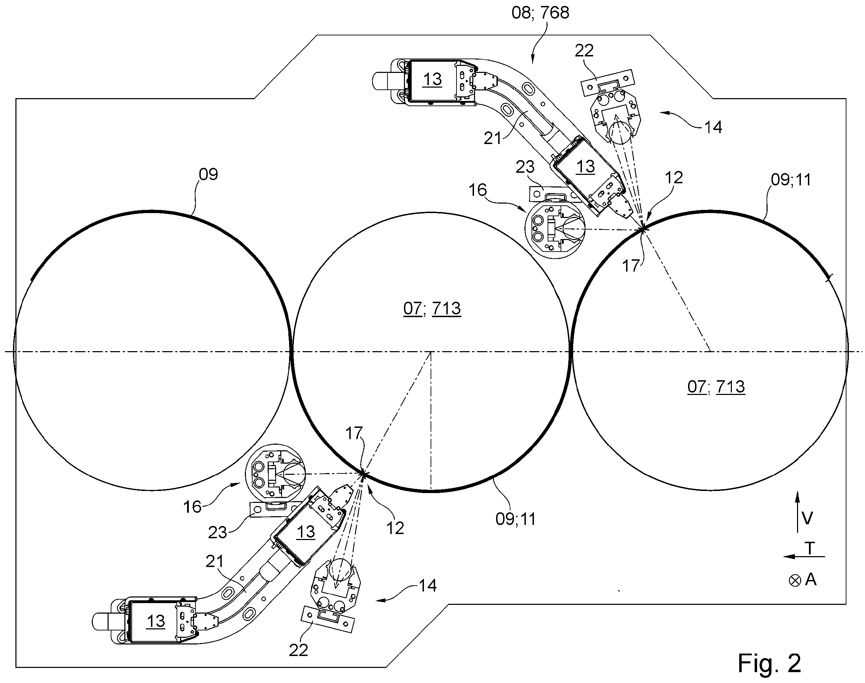

- Fig. 2: eine schematische Darstellung eines Teils eines für einen Transport von Bogen vorgesehenen Transportwegs im Bereich zweier Inspektionseinrichtungen, wobei unterschiedliche Winkellagen angedeutet sind, aus denen Beleuchtungseinrichtungen einen jeweiligen Inspektionsbereich beleuchten können und wobei im rechten Teil ein Rotationstransportkörper mit zugeordneter Inspektionseinrichtung gemäß Fig. 1 dargestellt ist;

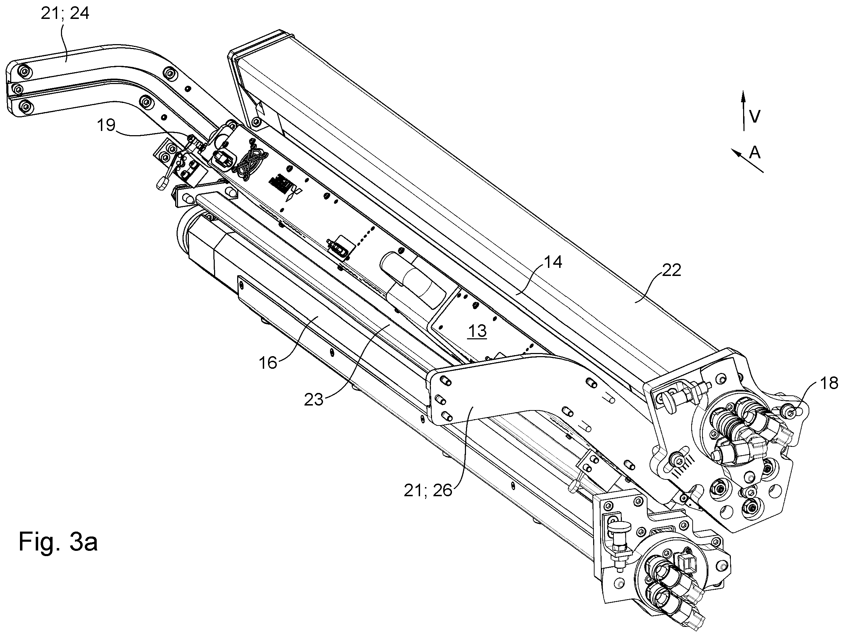

- Fig. 3a: eine schematische Darstellung einer Sensoreinrichtung und zweier Beleuchtungseinrichtungen einer Inspektionseinrichtung in einer schrägen Ansicht;

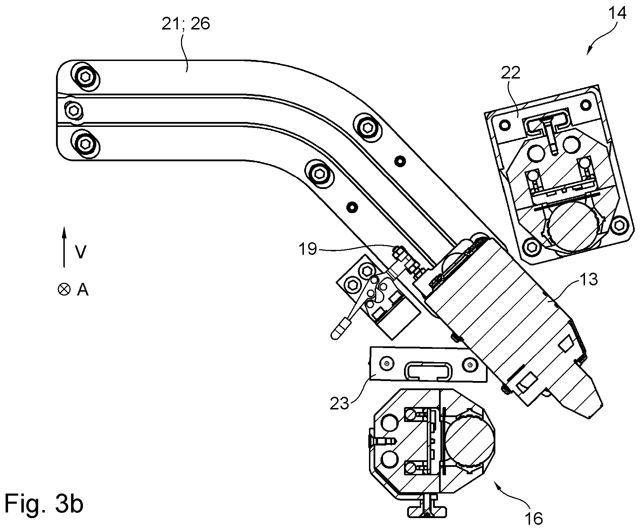

- Fig. 3b: eine schematische Darstellung einer Sensoreinrichtung und zweier Beleuchtungseinrichtungen einer Inspektionseinrichtung in einer seitlichen Schnittdarstellung;

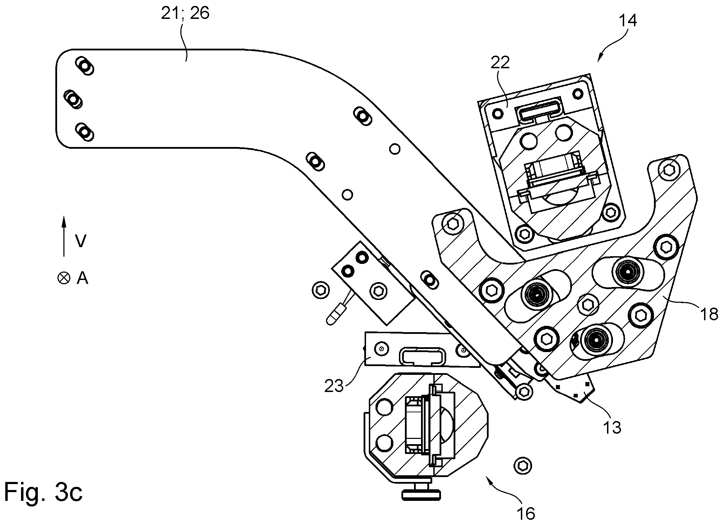

- Fig. 3c: eine schematische Darstellung einer Sensoreinrichtung und zweier Beleuchtungseinrichtungen einer Inspektionseinrichtung in einer seitlichen Schnittdarstellung;

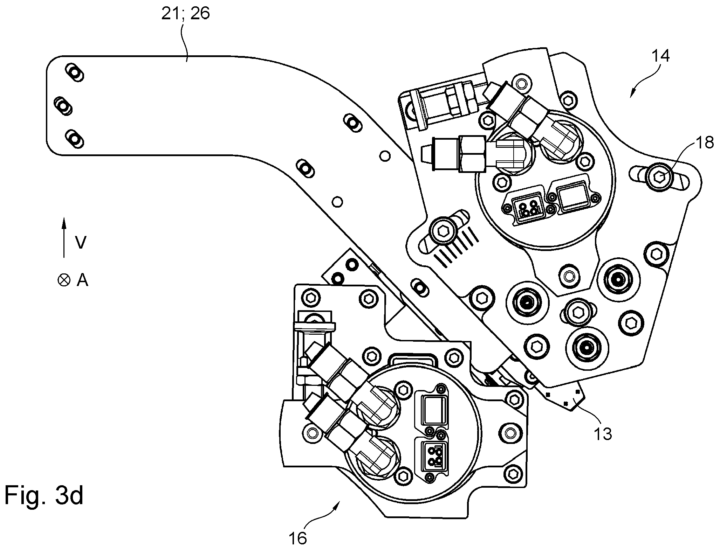

- Fig. 3d: eine schematische Darstellung einer Sensoreinrichtung und zweier Beleuchtungseinrichtungen einer Inspektionseinrichtung in einer seitlichen Ansicht;
- Fig. 4: eine schematische Darstellung einer ersten Ausführungsform einer Bogendruckmaschine mit einer Siebdruckeinheit mit drei Basismodulen;
- Fig. 5: eine schematische Darstellung einer zweiten Ausführungsform einer Bogendruckmaschine mit einer Siebdruckeinheit mit zwei Basismodulen;
- Fig. 6: eine schematische Darstellung einer dritten Ausführungsform einer Bogendruckmaschine mit einer Siebdruckeinheit mit einem Basismodul;

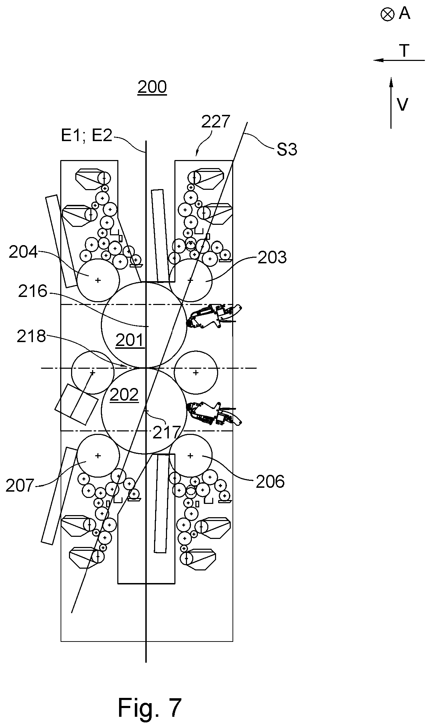

- Fig. 7: eine schematische Darstellung einer Simultan-Doppeldruckeinheit;

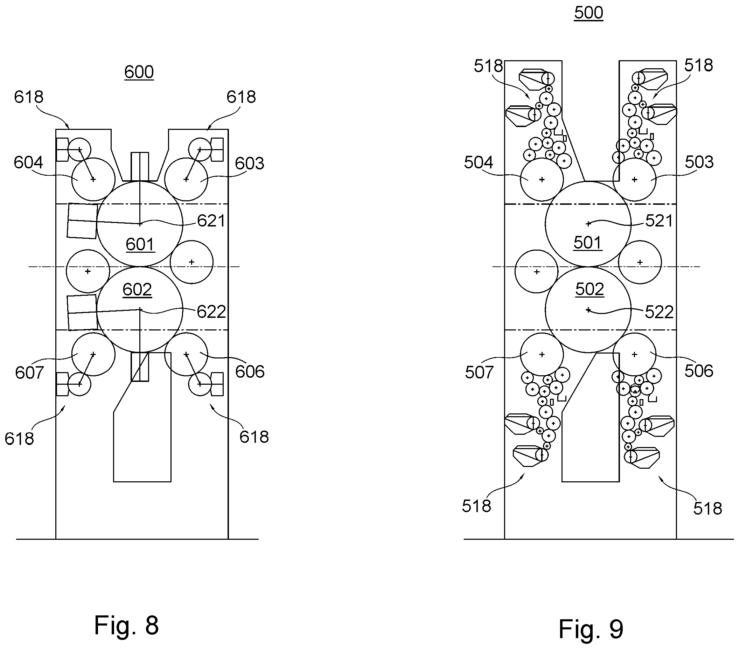

- Fig. 8: eine schematische Darstellung einer Flexo-Druckeinheit;
- Fig. 9: eine schematische Darstellung einer Bogen-Nummerier-Druckeinheit;
- Fig. 10a: eine schematische Darstellung einer Bogendruckmaschine mit zwei Simultan-Doppeldruckeinheiten und Inspektionseinrichtungen;
- Fig. 10b: eine schematische Darstellung der beiden Simultan-Doppeldruckeinheiten gemäß Fig. 10a;

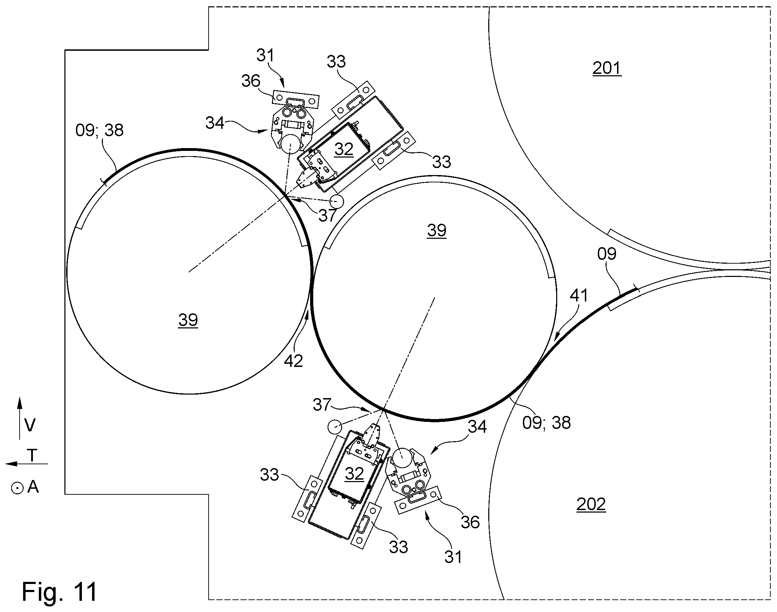

- Fig. 11: eine schematische Darstellung eines Teils eines für einen Transport von Bogen vorgesehenen Transportwegs im Bereich zweier Inspektionseinrichtungen nach einer Druckstelle einer Simultan-Doppeldruckeinheit.

Eine Maschine 01 zur Handhabung von Bogen 02 dient zumindest auch der Inspektion von Bogen 02. Diese Bogen 02 sind Bogen 02 eines jeweiligen Substrats 02. Die Maschine 01 weist beispielsweise weitere Einrichtungen auf, die beispielsweise einer Bearbeitung der Bogen 02 dienen können. Beispiele hierfür sind Beschichtungsvorrichtungen wie Grundierungseinrichtungen und/oder Druckeinrichtungen und/oder Lackiereinrichtungen oder Formgebungseinrichtungen wie Schneideinrichtungen und/oder Stanzeinrichtungen und/oder Perforiereinrichtungen und/oder Falzeinrichtungen. Die Maschine 01 ist also bevorzugt als Inspektionsmaschine 01 ausgebildet. Beispielsweise ist die Maschine 01 zusätzlich als Bogenbearbeitungsmaschine 01, bevorzugt Beschichtungsmaschine 01, insbesondere Druckmaschine 01 ausgebildet. Wenn im Vorangegangenen und/oder im Folgenden beispielhaft eine Beschichtungsmaschine 01, insbesondere Druckmaschine 01 dargestellt wird, sind entsprechende Angaben jedoch auch für eine reine Inspektionsmaschine 01 gültig, soweit sich daraus keine Widersprüche ergeben. Beispielsweise ist die Maschine 01 zusätzlich oder alternativ dazu als Formgebungsmaschine 01 ausgebildet. Bevorzugt ist die Maschine 01 als Maschine 01 zur Handhabung von Wertpapierbogen 02 ausgebildet, insbesondere als Wertpapierhandhabungsmaschine 01 und/oder Wertpapierinspektionsmaschine 01 und/oder Wertpapierdruckmaschine 01. Beispielsweise ist die Maschine 01 als Bogendruckmaschine 01, insbesondere Bogen-Rotationsdruckmaschine 01 oder weiter bevorzugt als Wertpapier-Bogendruckmaschine 01 ausgebildet.

Die Maschine 01 weist zumindest eine Inspektionseinrichtung 08; 768 zur Inspektion von Bogen 02 auf. Diese zumindest eine Inspektionseinrichtung 08; 768 ist bevorzugt derart angeordnet, dass sie Bogen 02 erfassen kann, die an ihr vorbei transportiert werden. Bevorzugt ist der Maschine 01 ein für einen Transport von Bogen 02 vorgesehener Transportweg zugeordnet. Dieser beginnt bevorzugt an einer Substratzufuhreinrichtung 100. Die Substratzufuhreinrichtung 100 ist beispielsweise als Bogenzufuhreinrichtung 100, insbesondere als Bogenanleger 100 ausgebildet. Bevorzugt weist die Maschine 01 also zumindest einen Bogenanleger 100 auf. Alternativ weist die Maschine 01 zumindest eine Rollenabspulvorrichtung und zumindest eine Querschneideinrichtung auf.

Die Maschine 01 weist beispielsweise zumindest eine Bogenbearbeitungseinheit 200; 500; 600; 700 auf. Die zumindest eine Bogenbearbeitungseinheit 200; 500; 600; 700 ist beispielsweise als Bogendruckeinheit 200; 500; 600; 700 ausgebildet. Je nach Ausführungsform sind unterschiedliche Druckverfahren möglich.

Die Bogen 02 sind beispielsweise aus zellulose- oder bevorzugt baumwollfaserbasiertem Papier, aus Kunststoffpolymer oder aus einem Hybridprodukt hieraus gebildet. Die Bogen 02 können vor der Inspektion und/oder Bearbeitung durch die Maschine 01 unbeschichtet oder bereits beschichtet worden sein. Die Bogen 02 können unbedruckt oder bereits ein- oder mehrfach bedruckt oder anderweitig mechanisch bearbeitet worden sein. Auf einem Bogen 02 sind bevorzugt mehrere Nutzen, insbesondere Druckbilder herzustellender Banknoten, in einer Zeile nebeneinander und mehrere derartiger Zeilen von Nutzen bzw. deren Druckbild in Transportrichtung T hintereinander angeordnet bzw. werden im Verlauf einer Bearbeitung des jeweiligen Bogens 02 entsprechend angeordnet.

Die Substratzufuhreinrichtung 100 oder Bogenzufuhreinrichtung 100 der Maschine 01 ist bevorzugt am Anfang des für den Transport von Substrat 02, insbesondere Bogen 02 vorgesehenen Transportwegs angeordnet. Die zumindest eine Substratzufuhreinrichtung 100 weist bevorzugt eine beispielsweise als Bändertisch 101 ausgebildete Förderstrecke 101 auf. Beispielsweise ist zumindest eine bevorzugt als Stapelplatte ausgebildete Aufnahmeeinrichtung angeordnet. Auf dieser können dann als Bogenstapel ausgebildete Bedruckstoffgebinde zur Vereinzelung angeordnet werden. Die Aufnahmeeinrichtung ist bevorzugt mit zumindest einem Transportmittel verbunden, welches sicherstellt, dass der jeweils oberste Bogen 02 des Bogenstapels in einer definierten Position angeordnet ist, auch wenn der Bogenstapel abgearbeitet wird. Die Substratzufuhreinrichtung 100 umfasst vorzugsweise Bogenvereinzelungsorgane und Bogentransportorgane. Die Bogenvereinzelungsorgane sind beispielsweise als Trennsauger ausgebildet. Die Bogentransportorgane sind beispielsweise als Transportsauger ausgebildet. Bevorzugt ist zumindest ein Vorderanschlag angeordnet. Beispielsweise verfügt die Substratzufuhreinrichtung 100 über zumindest eine Nonstop-Einrichtung für eine unterbrechungsfreie Versorgung mit Bogen 02 auch bei Anordnung eines nachfolgenden Stapels. Der dem Bogenstapel nachgeordnete Bändertisch ist beispielsweise als Saugbändertisch ausgebildet. Beispielsweise ist zumindest eine als Bogenanlage bezeichnete Anlageeinrichtung angeordnet, die vorzugsweise einen Anlegetisch aufweist und zumindest einen bewegbaren Vorderanschlag aufweist. Der Bogenanleger 100 weist bevorzugt zumindest einen Schwinggreifer oder Schwinger auf. Entlang des für den Transport von Bogen 02 vorgesehenen Transportwegs nach dem Schwinggreifer ist bevorzugt eine Annahmetrommel 102 angeordnet. Bevorzugt werden Bogen 02 von dem Schwinggreifer an die Annahmetrommel 102 übergeben. Die Annahmetrommel 102 ist ein Rotationstransportkörper 102.

Die Maschine 01 weist bevorzugt zumindest ein als Auslagevorrichtung 900, insbesondere Bogenauslage 900 ausgebildetes Aggregat 900 auf, insbesondere zusätzlich zu der zumindest einen Inspektionseinrichtung 08; 768 und gegebenenfalls zusätzlich zu der zumindest einen Bogenbearbeitungseinheit 200; 500; 600; 700. Die Bogenauslage 900 enthält bevorzugt zumindest ein Bogenfördersystem 904, welches insbesondere als Kettenfördersystem 904 bzw. Kettengreifersystem 904 ausgebildet ist. Das Bogenfördersystem 904 enthält beispielsweise über Antriebs- und Umlenkmittel bewegte Zugmittel, die Greifeinrichtungen zur Bogenförderung antreiben. Die Greifeinrichtungen weisen Fixierorgane zur Übernahme und Fixierung der Bogen 02 auf. Als Fixierorgane können Greifer, insbesondere Klemm- und/oder Sauggreifer zum Greifen der Bogenkanten eingesetzt werden. Mittels der Bogenauslage 900 werden die Bogen 02 bevorzugt auf zumindest eine oder weiter bevorzugt eine von mehreren - beispielsweise als Palette ausgebildeten oder anders gearteten - Transportunterlagen in Form eines jeweiligen Auslagestapels abgelegt. Beispielsweise ist in der Bogenauslage 900 eine Bogenleitvorrichtung und/oder eine Trocken- und/oder Aushärteeinrichtung 906 angeordnet. Die bevorzugt von einer Bremseinrichtung verzögerten Bogen 02 legen sich an Vorderanschlägen an und werden so ausgerichtet auf dem jeweiligen Auslagestapel abgelegt. Beispielsweise ist die Bogenauslage 900 mit einer Nonstop-Einrichtung für einen unterbrechungsfreien Abtransport von Auslagestapeln ausgerüstet.

Besonders in Verbindung mit einer mehrere Stapelplätze umfassenden Auslagevorrichtung 900 ist in vorteilhafter Weiterbildung entlang des für den Transport von Bogen 02 vorgesehenen Transportwegs nach einer letzten Ausrichteinrichtung 771 die zumindest eine Inspektionseinrichtung 768 angeordnet. Als schadhaft oder als ein fehlerhaftes Druckbild aufweisend erachtete Bogen 02 können dann als auf einem der Stapel gesammelt werden, während sogenannte Gutbogen auf einem anderen Stapel abgelegt werden.

Beispielsweise weist die Auslagevorrichtung 900 entlang des für den Transport der Bogen 02 vorgesehenen Transportwegs zumindest zwei, weiter bevorzugt zumindest drei insbesondere entlang des für den Transport von Substrat 02 vorgesehenen Transportwegs hintereinander angeordnete Abgabestationen 901; 902; 903 auf. Die zumindest eine Auslagevorrichtung 900 ist also bevorzugt als Mehrfachstapelauslage 900, insbesondere zumindest als Doppelstapelauslage 900 oder zumindest als Dreifachstapelauslage 900 oder zumindest als Vierfachstapelauslage 900 ausgebildet. Die Abgabestationen 901; 902; 903 werden auch Stapelauslagen 901; 902; 903 genannt. Unter einer jeweiligen Abgabestation 901; 902; 903 oder Stapelauslage 901; 902; 903 ist dabei insbesondere eine Einrichtung zu verstehen, die zur Bildung eines jeweiligen Stapels dient.

Der für den Transport von insbesondere zumindest teilweise vereinzelten Bogen 02 vorgesehene Transportweg beginnt bevorzugt an der Substratzufuhreinrichtung 100 und/oder endet bevorzugt an der Bogenauslage 900. Der für den Transport von Bogen 02 vorgesehene Transportweg und weiter bevorzugt jeder Abschnitt 11 davon ist bevorzugt ein Raumbereich. Mehrere Bogen 02 aufweisende Stapel werden bevorzugt der Substratzufuhreinrichtung 100 zugeführt und/oder der Bogenauslage 900 entnommen. Der Transportweg dieser Stapel soll nicht zum für den Transport von Bogen 02 vorgesehenen Transportweg gezählt werden. Beispielsweise ist entlang des für den Transport von Bogen 02 vorgesehenen Transportwegs zumindest eine Ganzbogenkontrolleinrichtung 773 angeordnet. Diese dient insbesondere dazu, eine Ankunft zum erwarteten Zeitpunkt und/oder eine erwartete Form von Seitenrändern der Bogen 02 zu erfassen. Die Ganzbogenkontrolleinrichtung 773 weist beispielsweise zumindest eine Quelle für elektromagnetische Strahlung, insbesondere sichtbares Licht, und einen Sensor für elektromagnetische Strahlung, insbesondere sichtbares Licht, auf.

Eine Transportrichtung T ist im Fall eines gekrümmten Transportwegs bevorzugt jeweils diejenige Richtung T, die tangential zu einem einem jeweiligen Referenzpunkt nächsten Teilstück und/oder Punkt des vorgesehenen Transportwegs verläuft und für den Transport des Substrats 02 und/oder Bogens 02 an diesem Teilstück und/oder Punkt vorgesehen ist. Dieser jeweilige Referenzpunkt liegt bevorzugt an dem Punkt und/oder an dem Bauteil, das zu der Transportrichtung T in Bezug gesetzt wird. Die Transportrichtung T erstreckt sich demnach bevorzugt jeweils längs des für Substrat 02 und/oder Bogen 02 vorgesehenen Transportwegs. Entlang des für den Transport von Bogen 02 vorgesehenen Transportwegs ist an jeder Stelle die Transportrichtung T festgelegt, insbesondere als diejenige Richtung T, die an der entsprechenden Stelle des vorgesehenen Transportwegs tangential zu diesem und parallel zur an dieser Stelle vorgesehenen Bewegung der Bogen 02 orientiert ist. Eine Querrichtung A ist bevorzugt eine Richtung A, die sich orthogonal zu der Transportrichtung T und horizontal erstreckt. Bevorzugt ist die Querrichtung A orthogonal zu einer vertikalen Richtung V orientiert.

Eine Arbeitsbreite der Maschine 01 ist bevorzugt eine Abmessung, die sich orthogonal zu dem für den Transport von Bogen 02 vorgesehenen Transportweg 09 durch die Maschine 01 und/oder in der Querrichtung A erstreckt. Die Arbeitsbreite der Maschine 01 entspricht bevorzugt einer maximalen Breite, die ein Bogen 02 aufweisen darf, um noch mit der Maschine 01 bearbeitet werden zu können, also insbesondere einer maximalen mit der Maschine 01 verarbeitbaren Bogenbreite. Unter der Breite eines Bogens 02 ist dabei insbesondere dessen Abmessung in der Querrichtung A zu verstehen. Dies ist bevorzugt unabhängig davon, ob diese Breite des Bogens 02 größer oder kleiner ist als eine dazu orthogonale horizontale Abmessung des Bogens 02, die weiter bevorzugt die Länge dieses Bogens 02 darstellt. Die Arbeitsbreite der Maschine 01 entspricht bevorzugt einer Arbeitsbreite einzelner Bestandteile der Maschine 01. Die Maschine 01 weist bevorzugt eine maximale Arbeitsbreite von zumindest 50 cm auf, weiter bevorzugt zumindest 75 cm und noch weiter bevorzugt zumindest 100 cm. Die Maschine 01 weist bevorzugt ein insbesondere ortsfestes Gestell 03 auf, das zumindest zwei insbesondere ortsfeste Gestellseitenwände 04; 06 aufweist.

Die Maschine 01 zur Handhabung und bevorzugt auch zur Bearbeitung von Bogen 02 weist zumindest eine Inspektionseinrichtung 08; 768 zur insbesondere optischen Inspektion von Bogen 02 auf. Die Maschine 01 weist zumindest ein Bogentransportmittel 07; 708; 709; 711; 712; 713; 714 auf, das einen Abschnitt 11 eines für einen Transport von Bogen 02 vorgesehenen Transportwegs 09 festlegt. Dieser Abschnitt 11 umfasst einen Inspektionsbereich 12, wobei die Inspektionseinrichtung 08; 768 zumindest eine insbesondere optische Sensoreinrichtung 13 aufweist, die auf den Inspektionsbereich 12 ausgerichtet angeordnet ist. Insbesondere ist der Inspektionsbereich 12 ein Teilabschnitt desjenigen Abschnitts 11 des Transportwegs 09, der von dem Bogentransportmittel 07; 708; 709; 711; 712; 713; 714 festgelegt ist und zwar derjenige Teilabschnitt, der von der Sensoreinrichtung 13 erfassbar ist. Bevorzugt ist das Bogentransportmittel 07; 708; 709; 711; 712; 713; 714 als Rotationstransportkörper 07; 708; 709; 711; 712; 713; 714 ausgebildet, weiter bevorzugt als Saugtrommel 713. Unter einem Rotationstransportkörper 708; 709; 711; 712; 713; 714 ist bevorzugt eine Baugruppe 708; 709; 711; 712; 713; 714 zu verstehen, die um eine jeweilige Rotationsachse rotierbar angeordnet ist und dem Transport von Bogen 02 dient. Insbesondere ist durch einen jeweiligen 708; 709; 711; 712; 713; 714 ein jeweiliger Abschnitt des für den Transport von Bogen 02 vorgesehenen Transportwegs festgelegt, wobei dieser Abschnitt bevorzugt im Wesentlichen die Form einer Teilfläche eines Zylindermantels aufweist. Bevorzugt ist die zumindest eine Inspektionseinrichtung 768 auf eine Auflagefläche einer Saugtrommel 713 ausgerichtet angeordnet. Durch das Ansaugen des jeweiligen Bogens 02 ist dessen Lage auf der Saugtrommel 713 besonders stabil. Dies ermöglicht eine Inspektion mit besonders hoher Präzision. Bevorzugt ist das Bogentransportmittel 07; 708; 709; 711; 712; 713; 714 als rotierbares Bogentransportmittel 07; 708; 709; 711; 712; 713; 714 ausgebildet, dessen Rotationsachse sich in der Querrichtung A erstreckt. Die Inspektionseinrichtung 08; 768 weist zumindest eine erste Beleuchtungseinrichtung 14 auf, die auf den Inspektionsbereich 12 ausgerichtet angeordnet ist.

Die zumindest eine Sensoreinrichtung 13 ist bevorzugt als optische Sensoreinrichtung 13 ausgebildet, insbesondere als Kamera 13 und weiter bevorzugt als Zeilenkamera 13. Bevorzugt weist die zumindest eine optische Sensoreinrichtung 13 eine Erfassungsbreite auf, die zumindest 80 %, weiter bevorzugt zumindest 90 % und noch weiter bevorzugt zumindest 95 % der maximalen Arbeitsbreite beträgt.

Bevorzugt ist zumindest eine Führungseinrichtung 21 der zumindest einen Sensoreinrichtung 13 angeordnet, die einen für eine Bewegung der zumindest einen Sensoreinrichtung 13 vorgesehenen Sensorstellweg festlegt, der sich von der Inspektionsposition zumindest bis zu einer als Wartungsposition ausgebildeten ersten Abstellposition erstreckt. Der Sensorstellweg erstreckt sich bevorzugt zumindest zwischen der Inspektionsposition und der ersten Abstellposition orthogonal zu der Querrichtung A, weiter bevorzugt ausschließlich orthogonal zu der Querrichtung A. Bevorzugt erstreckt sich der Sensorstellweg auf einer Länge von zumindest 10 cm, weiter bevorzugt zumindest 20 cm, noch weiter bevorzugt zumindest 30 cm, noch weiter bevorzugt zumindest 40 cm und noch weiter bevorzugt zumindest 50 cm insbesondere ausschließlich orthogonal zu der Querrichtung A. Bevorzugt weist die zumindest eine Führungseinrichtung 21 der zumindest einen Sensoreinrichtung 13 zumindest zwei Schienen 24; 26 auf, durch die der Sensorstellweg festgelegt ist. Diese Schienen 24; 26 sind bevorzugt ortsfest zu und/oder an den Gestellseitenwänden 04; 06 des Gestells 03 der Maschine 01 angeordnet. Bevorzugt ist die zumindest eine Sensoreinrichtung 13 in ihrer ersten Abstellposition für eine Reinigung zugänglich und/oder aus der Maschine 01 entnehmbar.

Beispielsweise ist der Sensorstellweg zumindest teilweise gekrümmt und/oder weist die zumindest eine Sensoreinrichtung 13 in ihrer ersten Abstellposition in eine andere Richtung. Bevorzugt ist zumindest ein insbesondere erstes Halteelement 19 derart angeordnet, dass bei in der Inspektionsposition angeordneter Sensoreinrichtung 13 ein Umschalten einer Einrichtung und/oder ein Überwinden einer Haltekraft notwendig ist, um die Sensoreinrichtung 13 aus dieser Inspektionsposition heraus bewegen zu können. Beispielsweise ist zumindest ein insbesondere zweites Halteelement derart angeordnet, dass bei in der ersten Abstellposition angeordneter Sensoreinrichtung 13 ein Umschalten einer Einrichtung und/oder ein Überwinden einer Haltekraft notwendig ist, um die Sensoreinrichtung 13 aus dieser ersten Abstellposition heraus bewegen zu können.

Bevorzugt ist zumindest eine Anschlussleitung der zumindest einen Sensoreinrichtung 13 derart angeordnet ist, dass sie eine Bewegung der zumindest einen Sensoreinrichtung 13 zwischen der Inspektionsposition und der ersten Abstellposition erlaubt, während eine durch diese jeweilige Anschlussleitung sichergestellte leitungstechnische Verbindung aufrecht erhalten bleibt. Weiter bevorzugt sind sämtliche Anschlussleitungen der zumindest einen Sensoreinrichtung 13 derart angeordnet, dass sie eine Bewegung der zumindest einen Sensoreinrichtung 13 zwischen der Inspektionsposition und der ersten Abstellposition erlauben, während eine durch diese jeweilige Anschlussleitung sichergestellte leitungstechnische Verbindung aufrecht erhalten bleibt.

Bevorzugt ist die zumindest eine erste Beleuchtungseinrichtung 14 insbesondere zum Wechsel zwischen unterschiedlichen Beleuchtungspositionen um eine erste Schwenkachse 17 schwenkbar angeordnet. Die zumindest eine erste Beleuchtungseinrichtung 14 ist bevorzugt um die erste Schwenkachse 17 schwenkbar in unterschiedlichen Beleuchtungspositionen anordenbar. Bevorzugt ist die erste Beleuchtungseinrichtung 14 unabhängig von der zumindest einen Sensoreinrichtung 13 um die erste Schwenkachse 17 schwenkbar angeordnet. Diese erste Schwenkachse ist 17 bevorzugt parallel zu der Querrichtung A orientiert. Bevorzugt ist die erste Schwenkachse 17 so angeordnet, dass die erste Schwenkachse 17 den Inspektionsbereich 12 schneidet oder einen kleinsten Abstand zu dem Inspektionsbereich 12 aufweist, der höchstens 20 mm beträgt, weiter bevorzugt höchstens 10 mm und noch weiter bevorzugt höchstens 5 mm. Die zumindest eine erste Beleuchtungseinrichtung 14 ist bevorzugt in einem von zwei Endlagen begrenzten ersten Winkelbereich um die erste Schwenkachse 17 schwenkbar angeordnet. Dieser erste Winkelbereich erstreckt sich bevorzugt über zumindest 5°, weiter bevorzugt zumindest 8° und noch weiter bevorzugt zumindest 10°. Bevorzugt ist zumindest eine Schwenkführungseinrichtung 18 angeordnet, die für Schwenkbewegungen der zumindest einen ersten Beleuchtungseinrichtung 14 einen entsprechenden Schwenkweg festlegt. Die zumindest eine Schwenkführungseinrichtung 18 weist beispielsweise Schienenelemente und/oder Langlöcher auf, die für Führungselemente entsprechende Kreisbogen definieren. Alternativ oder zusätzlich weist die zumindest eine Schwenkführungseinrichtung 18 beispielsweise Führungselemente auf, die zur Führung entsprechend bewegbarer Bauteile durch darin angeordnete Schienenelemente und/oder Langlöcher vorgesehen sind.

Die zumindest eine erste Beleuchtungseinrichtung 14 ist bevorzugt als Einrichtung zum Aussenden von elektromagnetischer Strahlung im sichtbaren Bereich ausgebildet, insbesondere zum Aussenden von weißem Licht im sichtbaren Bereich. Alternativ oder zusätzlich ist die zumindest eine erste Beleuchtungseinrichtung 14 als Einrichtung zum Aussenden von elektromagnetischer Strahlung im Infrarotbereich ausgebildet. Alternativ oder zusätzlich ist die zumindest eine erste Beleuchtungseinrichtung 14 als Einrichtung zum Aussenden von elektromagnetischer Strahlung im ultravioletten Bereich ausgebildet. Bevorzugt ist die zumindest eine erste Beleuchtungseinrichtung 14 derart umschaltbar ausgebildet, dass sie wahlweise elektromagnetischer Strahlung im sichtbaren Bereich und/oder elektromagnetischer Strahlung im Infrarotbereich und/oder elektromagnetischer Strahlung im ultravioletten Bereich aussendet.

Bevorzugt ist die zumindest eine erste Beleuchtungseinrichtung 14 zur Beleuchtung des Inspektionsbereichs 12 mit zumindest mehrheitlich gerichtetem Licht ausgebildet. Bevorzugt sind also mehr als 50 %, weiter zumindest 75 % und noch weiter bevorzugt zumindest 90 % der von der zumindest einen ersten Beleuchtungseinrichtung 14 stammenden und auf den Inspektionsbereich 12 einfallenden Lichtintensität gerichtetem Licht zugeordnet.

Die zumindest eine Inspektionseinrichtung 08; 768 weist bevorzugt zumindest eine zweite Beleuchtungseinrichtung 16 auf, die auf den Inspektionsbereich 12 ausgerichtet angeordnet ist. Diese zumindest eine zweite Beleuchtungseinrichtung 16 ist bevorzugt zur Beleuchtung des Inspektionsbereichs 12 mit zumindest mehrheitlich diffusem Licht ausgebildet. Bevorzugt sind also mehr als 50 %, weiter zumindest 75 % und noch weiter bevorzugt zumindest 90 % der von der zumindest einen zweiten Beleuchtungseinrichtung 16 stammenden und auf den Inspektionsbereich 12 einfallenden Lichtintensität diffusem Licht zugeordnet. Die zumindest eine zweite Beleuchtungseinrichtung 16 ist bevorzugt als Einrichtung zum Aussenden von elektromagnetischer Strahlung im sichtbaren Bereich ausgebildet, insbesondere zum Aussenden von weißem Licht im sichtbaren Bereich. Alternativ oder zusätzlich ist die zumindest eine zweite Beleuchtungseinrichtung 16 als Einrichtung zum Aussenden von elektromagnetischer Strahlung im Infrarotbereich ausgebildet. Alternativ oder zusätzlich ist die zumindest eine zweite Beleuchtungseinrichtung 16 als Einrichtung zum Aussenden von elektromagnetischer Strahlung im ultravioletten Bereich ausgebildet. Bevorzugt ist die zumindest eine zweite Beleuchtungseinrichtung 16 derart umschaltbar ausgebildet, dass sie wahlweise elektromagnetischer Strahlung im sichtbaren Bereich und/oder elektromagnetischer Strahlung im Infrarotbereich und/oder elektromagnetischer Strahlung im ultravioletten Bereich aussendet.

Bevorzugt ist die Inspektionseinrichtung 08; 768 in ihrer Arbeitsposition zwischen der ihr zugeordneten zumindest einen ersten Beleuchtungseinrichtung 14 und der ihr zugeordneten zumindest einen zweiten Beleuchtungseinrichtung 16 angeordnet. Insbesondere schneidet bevorzugt zumindest eine geradlinige Verbindunglinie von der ersten Beleuchtungseinrichtung 14 zu der zweiten Beleuchtungseinrichtung 16 die Inspektionseinrichtung 08; 768.

Bevorzugt ist eine Abstellführungseinrichtung 22 der ersten Beleuchtungseinrichtung 14 angeordnet, die einen Stellweg der ersten Beleuchtungseinrichtung 14 festlegt, entlang dem die die zumindest eine erste Beleuchtungseinrichtung 14 zwischen zumindest einer Beleuchtungsposition der zumindest einen ersten Beleuchtungseinrichtung 14 und zumindest einer Wartungsposition der zumindest einen ersten Beleuchtungseinrichtung 14 bewegbar ist. Dieser Stellweg der ersten Beleuchtungseinrichtung 14 ist bevorzugt linear und/oder verläuft bevorzugt parallel zu der Querrichtung A. Bevorzugt unterscheiden sich die jeweilige Beleuchtungsposition der zumindest einen ersten Beleuchtungseinrichtung 14 und die Wartungsposition der zumindest einen ersten Beleuchtungseinrichtung 14 in ihrer auf die Querrichtung A bezogenen Lage, insbesondere um eine Länge, die zumindest der Arbeitsbreite der Maschine 01 und/oder zumindest der lichten Weite W der Maschine 01 entspricht, insbesondere zumindest einer Summe aus der lichten Weite W und einer Abmessung einer Gestellseitenwand 04; 06 des Gestells 03 der Maschine 01 in der Querrichtung A. Die Abstellführungseinrichtung 22 der ersten Beleuchtungseinrichtung 14 weist beispielweise eine Schiene und mehrere Rollenelemente auf. Bevorzugt ist die zumindest eine Abstellführungseinrichtung 22 gemeinsam mit der ersten Beleuchtungseinrichtung 14 um die erste Schwenkachse 17 schwenkbar angeordnet, insbesondere durch die zumindest eine Schwenkführungseinrichtung 18 geführt.

Bevorzugt ist eine Abstellführungseinrichtung 23 der zweiten Beleuchtungseinrichtung 16 angeordnet, die einen Stellweg der zweiten Beleuchtungseinrichtung 16 festlegt, entlang dem die zumindest eine zweite Beleuchtungseinrichtung 16 zwischen zumindest einer Beleuchtungsposition der zumindest einen zweiten Beleuchtungseinrichtung 16 und zumindest einer Wartungsposition der zumindest einen zweiten Beleuchtungseinrichtung 16 bewegbar ist. Dieser Stellweg der zweiten Beleuchtungseinrichtung 16 ist bevorzugt linear und/oder verläuft bevorzugt parallel zu der Querrichtung A. Bevorzugt unterscheiden sich die Beleuchtungsposition der zumindest einen zweiten Beleuchtungseinrichtung 16 und die Wartungsposition der zumindest einen zweiten Beleuchtungseinrichtung 16 in ihrer auf die Querrichtung A bezogenen Lage, insbesondere um eine Länge, die zumindest der Arbeitsbreite der Maschine 01 und/oder zumindest der lichten Weite W der Maschine 01 entspricht, insbesondere zumindest einer Summe aus der lichten Weite W und einer Abmessung einer Gestellseitenwand 04; 06 des Gestells 03 der Maschine 01 in der Querrichtung A. Die Abstellführungseinrichtung 23 der zweiten Beleuchtungseinrichtung 16 weist beispielweise eine Schiene und mehrere Rollenelemente auf.

Die Maschine 01 weist beispielsweise zumindest zwei solcher Inspektionseinrichtungen 08; 768 auf. Beispielweise ist eine erste Inspektionseinrichtung 08; 768 zur Inspektion einer ersten Seite eines jeweiligen Bogens 02 angeordnet und ist eine zweite Inspektionseinrichtung 08; 768 zur Inspektion einer der ersten Seite des jeweiligen Bogens 02 gegenüberliegenden zweiten Seite des jeweiligen Bogens 02 angeordnet. Dies sind insbesondere eine Vorderseite und eine Rückseite eines jeweiligen Bogens 02. Die beiden Inspektionseinrichtungen 08; 768 wirken dann beispielsweise mit unterschiedlichen Bogentransportmitteln 07; 708; 709; 711; 712; 713; 714 zusammen, die aber bevorzugt gleichermaßen ausgebildet sind, beispielsweise jeweils als Saugtrommel 713.

Die zumindest eine Inspektionseinrichtung 08; 768 ist in einer Ausführungsform in eine Vorrichtung der Maschine 01 integriert, beispielsweise in ein Modul, insbesondere eine Siebdruckeinheit 700. In einer alternativen oder zusätzlichen Weiterbildung weist die Maschine 01 eine eigenständige Inspektionseinrichtung auf, die beispielsweise als separates Modul ausgebildet ist und/oder an unterschiedlichen Stellen einer modular aufgebauten Maschine 01 eingesetzt werden kann.

Die Maschine 01 weist beispielsweise zumindest eine Bogenbearbeitungseinheit 200; 500; 600; 700 auf. Beispielsweise weist die Maschine 01 zumindest zwei oder noch mehr Bogenbearbeitungseinheiten 200; 500; 600; 700 auf. Die zumindest eine Bogenbearbeitungseinheit 200; 500; 600; 700 ist bevorzugt zumindest auch als Bogendruckeinheit 200; 500; 600; 700 ausgebildet. Unter einer Bogendruckeinheit 200; 500; 600; 700 soll dabei gegebenenfalls auch allgemein eine Bogenbeschichtungseinheit 200; 500; 600; 700 zu verstehen sein, also insbesondere auch eine Bogenlackiereinheit 200; 500; 600; 700. Die Bogendruckmaschine 01 weist beispielsweise mehrere Druckeinheiten 200; 500; 600; 700 auf, die unterschiedlichen Druckverfahren zugeordnet sind.

Die Maschine 01 weist beispielsweise zumindest eine bevorzugt als Bogendruckeinheit 700 ausgebildete Siebdruckeinheit 700 auf. Durch das Siebdruckverfahren ist eine besonders große Schichtstärke aufbringbar. Die Siebdruckeinheit 700 dient insbesondere einem Erzeugen optisch variabler Bildelemente, insbesondere Sicherheitselemente, auf den Bogen 02. Die Siebdruckeinheit 700 weist bevorzugt zumindest einen Gegendruckzylinder 708 und einen damit zusammenwirkenden Siebdruckformzylinder 752 auf. Die beiden bilden gemeinsam eine jeweilige Siebdruckstelle. Damit kann in üblicher Weise Beschichtungsmittel, insbesondere Druckfarbe auf Bogen 02 aufgetragen werden. Bevorzugt kommt zumindest ein optisch variables Beschichtungsmittel zum Einsatz, insbesondere zumindest eine optisch variable Druckfarbe und/oder zumindest ein optisch variabler Lack. Dieses optisch variable Beschichtungsmittel wird beispielsweise vollflächig oder bevorzugt in Teilbereichen in Form von ersten Druckbildelementen aufgebracht. Die Maschine 01 und bevorzugt die Siebdruckeinrichtung 700 weist bevorzugt zumindest eine Ausrichteinrichtung 771 zum Ausrichtung von im optisch variablen und auf dem jeweiligen Bogen 02 aufgebrachten Beschichtungsmittel enthaltenen und für die optische Variabilität verantwortlichen Partikeln auf. Als für die optische Variabilität verantwortliche Partikel sind bevorzugt im jeweiligen Beschichtungsmittel, insbesondere in der Druckfarbe oder in dem Lack magnetische oder magnetisierbare, nicht-sphärische Partikel, z. B. Pigmentpartikel, hier auch kurz als magnetische Partikel oder Flocken bezeichnet, enthalten. Die zumindest eine Ausrichteinrichtung 771 weist bevorzugt mehrere Bestandteile auf. Die Ausrichteinrichtung 709 und bevorzugt die Siebdruckeinheit 700 weist bevorzugt zumindest einen Ausrichtzylinder 709 auf. Dieser zumindest eine Ausrichtzylinder 709 ist bevorzugt Bestandteil einer jeweiligen Ausrichteinrichtung 771. Bevorzugt weist also die Ausrichteinrichtung 771 zumindest einen Ausrichtzylinder 709 auf, der insbesondere als Rotationstransportkörper 709 ausgebildet ist und/oder als magnetisch wirksamer Ausrichtzylinder 709 ausgebildet ist. Die Siebdruckeinrichtung 700 weist bevorzugt zumindest eine Vorausrichteinrichtung 767 auf. Diese zumindest eine Vorausrichteinrichtung 767 ist bevorzugt Bestandteil einer jeweiligen Ausrichteinrichtung 771.

Die Siebdruckeinrichtung 700 weist bevorzugt zumindest eine Trocknungseinrichtung 772 auf. Unter dem Begriff der Trocknungseinrichtung 772 ist dabei auch eine Aushärteeinrichtung 772 zu verstehen. Die zumindest eine jeweilige Trocknungseinrichtung 772 kann als Bestandteil einer jeweiligen Ausrichteinrichtung 771 betrachtet werden, insbesondere da sie der Fixierung der Ausrichtung dient. Die zumindest eine Trocknungseinrichtung 772 ist bevorzugt auf den für den Transport von Bogen 02 vorgesehenen Transportweg hinter dem oder weiter bevorzugt im Bereich des Ausrichtzylinders 709 angeordnet. Die zumindest eine Trocknungseinrichtung 772 ist bevorzugt als insbesondere schmalbandiger Strahlungstrockner 772 ausgebildet, beispielsweise als UV-Trockner 772, insbesondere LED-Trockner 772, weiter bevorzugt UV-LED-Trockner 772. Dieser ist bevorzugt derart entlang des für den Transport von Bogen 02 vorgesehenen Transportwegs angeordnet, dass er in Richtung einer Mantelfläche des jeweiligen Ausrichtzylinders 709 auf dessen Transportwinkel gerichtet ist, über welchen die Bogen 02 mittels des Ausrichtzylinders 709 gefördert werden. Unter einem solchen Transportwinkel ist dabei derjenige Winkelbereich um die jeweilige Rotationsachse des jeweiligen Rotationstransportkörpers 708; 709; 711; 712; 713; 714 zu verstehen, in dem Bogen 02 mittels dieses Rotationstransportkörpers 708; 709; 711; 712; 713; 714 und insbesondere von diesem gehalten transportiert werden. Um ein unnötiges Erhitzen zu vermeiden, arbeitet die Trocknungseinrichtung 772 bevorzugt in einem schmalbandigen, die Härtung begünstigenden Wellenlängenbereich, z. B. in einem Wellenlängenband mit einer auf die Strahlungsleistung bezogenen spektralen Halbwertsbreite von höchstens 50 nm, bevorzugt höchstens 30 nm. Vorzugsweise liegt das Strahlungsmaximum bei einer Wellenlänge von 385 ± 25 nm, insbesondere 385 ± 15 nm.

In einer ebenfalls vorteilhaften Weiterbildung der Druckmaschine 01 ist stromabwärts einer letzten Ausrichteinrichtung 771 eine durchgehend über die gesamte Substratbreite wirksame Trocken- und/oder Aushärteeinrichtung 906, beispielsweise ein Strahlungstrockner 906, insbesondere UV-Trockner 906 für ein Durchtrocknen der auf die Bogen 02 aufgebrachten Beschichtungsmittel vorgesehen. Diese Trocken- und/oder Aushärteeinrichtung 906 ist bevorzugt als schmalbandiger Strahlungstrockner 906 ausgebildet.

Die Maschine 01 weist bevorzugt ein insbesondere ortsfestes Gestell 03 auf, das zumindest zwei insbesondere ortsfeste Gestellseitenwände 04; 06 aufweist. Beispielsweise weist die Siebdruckeinheit 700 ein insbesondere ortsfestes Gestell 701 auf, das zumindest zwei insbesondere ortsfeste Gestellseitenwände 702; 703 aufweist. Das Gestell 701 der Siebdruckeinheit 700 ist dann beispielsweise Bestandteil des Gestells der Maschine 01. Die Gestellseitenwände 702; 703 der Siebdruckeinheit 700 sind dann beispielsweise Bestandteile der Gestellseitenwände der Maschine 01. Die Siebdruckeinheit 700 ist beispielsweise in unterschiedlichen Ausführungsformen konfigurierbar. Diesen Ausführungsformen ist bevorzugt gemein, dass die jeweilige Siebdruckeinheit 700 jeweils zumindest ein insbesondere ortsfest angeordnetes Basismodul 704 aufweist. Die Gestellseitenwände der Maschine 01 sind einander gegenüberliegend angeordnet, insbesondere in der Querrichtung A gegenüberliegend. Bevorzugt sind die Gestellseitenwände 702; 703 der Siebdruckeinheit 700 einander gegenüberliegend angeordnet, insbesondere in der Querrichtung A gegenüberliegend.

Durch das jeweilige Basismodul 704 sind jeweils vier Einbaubereiche für Rotationstransportkörper 708; 709; 711; 712; 713; 714 festgelegt. Unter einem Rotationstransportkörper 708; 709; 711; 712; 713; 714 ist dabei eine Baugruppe 708; 709; 711; 712; 713; 714 zu verstehen, die um eine jeweilige Rotationsachse rotierbar angeordnet ist und dem Transport von Bogen 02 dient. Beispiele für Rotationstransportkörper 708; 709; 711; 712; 713; 714 sind Gegendruckzylinder 708, Ausrichtzylinder 709, Transfertrommeln 711, Blastrommeln 712, Saugtrommeln 713 und Kettenradwellen 714. Ein weiteres Beispiel für einen Rotationstransportkörper 102 ist eine Annahmetrommel 102. Die Annahmetrommel 102 ist jedoch bevorzugt Bestandteil der Bogenzufuhreinrichtung 100.

Die Siebdruckeinheit 700 ist zum Bedrucken von Bogen 02 mittels zumindest einer bevorzugt als Rundsieb ausgebildeten Druckform, insbesondere Siebdruckform ausgebildet. Bevorzugt weist diese Druckform eine Vielzahl von, insbesondere gleichartigen und/oder selben, bilderzeugenden Elementen, z. B. Druckbildsujets oder, insbesondere gleichartigen und/oder selben, Gruppen von bilderzeugenden Drucksujets am Umfang auf, welche auf einer der Druckbildlänge entsprechenden Umfangslänge z. B. matrixartig in mehreren quer zur Transportrichtung T äquidistant voneinander beabstandeten Spalten und auf einer der Druckbildbreite entsprechenden Zylinderbreite in mehreren in Transportrichtung T äquidistant voneinander beabstandeten Zeilen angeordnet sind. Diese Elemente bzw. Drucksujets sind bevorzugt in Art von Durchdruckschablonen ausgebildet. Die Siebdruckeinheit 700 weist bevorzugt zumindest einen Siebdruckformzylinder 752 auf. Bevorzugt ist jedem Siebdruckformzylinder 752 ein eigener Gegendruckzylinder 708 zugeordnet. Ein jeweiliger Siebdruckformzylinder 752 trägt ein solches Rundsieb und/oder weist ein solches Rundsieb auf. Der Gegendruckzylinder 708 und der Siebdruckformzylinder 752 bilden gemeinsam eine Siebdruckstelle.

Die Maschine 01 und insbesondere die Siebdruckeinheit 700 weist beispielsweise zumindest eine Transfertrommel 711 auf. Eine jeweilige Transfertrommel 711 weist in üblicher Weise zumindest eine Greifeinrichtung zur Bogenförderung auf. Die jeweilige Transfertrommel 711 weist bevorzugt zumindest einen Grundkörper auf. Die zumindest eine Greifeinrichtung weist Fixierorgane zur Übernahme und Fixierung der Bogen 02 auf. Die Fixierorgane sind bevorzugt an dem Grundkörper und/oder gemeinsam mit diesem bewegbar angeordnet. Als Fixierorgane sind bevorzugt Greifer, insbesondere Klemm- und/oder Sauggreifer zum Greifen der Bogenkanten angeordnet. Die jeweilige Transfertrommel 711 und insbesondere deren Grundkörper und/oder deren zumindest eine Greifeinrichtung sind um eine Rotationsachse 718 rotierbar angeordnet. Die Transfertrommel 711 weist beispielsweise aber nicht notwendigerweise eine Auflagefläche für Bogen 02 auf.

Die Maschine 01 und insbesondere die Siebdruckeinheit 700 weist beispielsweise zumindest eine Blastrommel 712 auf. Eine jeweilige Blastrommel 712 weist in üblicher Weise zumindest eine Greifeinrichtung zur Bogenförderung auf. Die jeweilige Blastrommel 712 weist bevorzugt zumindest einen Grundkörper auf. Die zumindest eine Greifeinrichtung weist Fixierorgane zur Übernahme und Fixierung der Bogen 02 auf. Die Fixierorgane sind bevorzugt an dem Grundkörper und/oder gemeinsam mit diesem bewegbar angeordnet. Als Fixierorgane sind bevorzugt Greifer, insbesondere Klemm- und/oder Sauggreifer zum Greifen der Bogenkanten angeordnet. Die jeweilige Blastrommel 712 und insbesondere deren zumindest eine Greifeinrichtung und/oder deren Grundkörper sind um eine Rotationsachse 719 rotierbar angeordnet. Die jeweilige Blastrommel 712 weist bevorzugt keine rotierbare Auflagefläche für Bogen 02 auf. Bevorzugt sind zumindest eine Bogenleiteinrichtung und zumindest eine Bogenblaseinrichtung angeordnet. Die zumindest eine Bogenleiteinrichtung weist bevorzugt zumindest eine Innenfläche auf, deren Form einem Abschnitt eines Zylindermantels entspricht, dessen Achse mit der Rotationsachse 719 der Blastrommel 712 identisch ist. Die zumindest eine Bogenblaseinrichtung dient dem Erzeugen eines von innen gegen die Innenfläche dieser Bogenleiteinrichtung gerichteten Gasstroms. Dadurch kann der entsprechende Bogen 02 von der Greifeinrichtung gehalten um die Rotationsachse 719 weiter transportiert werden, während seine nach innen gerichtete Seite abgesehen von Kontaktflächen der Fixierorgane nicht von Bestandteilen der Maschine 01, insbesondere der Siebdruckeinheit 700 berührt wird.

Die jeweilige Blastrommel 712 ist entlang des für den Transport von Bogen 02 vorgesehenen Transportwegs bevorzugt unmittelbar nach einem jeweiligen Gegendruckzylinder 708 angeordnet und weiter bevorzugt auch unmittelbar vor einem jeweiligen Ausrichtzylinder 709. Auf diese Weise können Bogen vom Gegendruckzylinder 708 bis zum Ausrichtzylinder 709 transportiert werden, ohne dass eine frisch bedruckte Bogenfläche mit einem Gegenstand in Kontakt gerät und das aufgetragene Druckbild so beschädigt werden könnte.

Bevorzugt ist im Bereich der Blastrommel 712 zumindest eine Vorausrichteinrichtung 767 angeordnet. Diese zumindest eine Vorausrichteinrichtung 767 ist bevorzugt Bestandteil einer jeweiligen Ausrichteinrichtung 771. Diese zumindest eine Vorausrichteinrichtung 767 ist bevorzugt ortsfest angeordnet. Diese zumindest eine Vorausrichteinrichtung 767 ist bevorzugt einer jeweiligen Blastrommel 712 zugeordnet, welche weiter bevorzugt einem jeweiligen nachfolgenden Ausrichtzylinder 709 zugeordnet ist. Die Vorausrichteinrichtung 767 ist bevorzugt derart ausgebildet, dass sie sich über einen Einwirkwinkel um die Rotationsachse 719 der Blastrommel 712 erstreckt. Die Vorausrichteinrichtung 767 weist bevorzugt zumindest einen und weiter bevorzugt mehrere Elektromagnete und/oder Permanentmagnete auf.

Die Maschine 01 und insbesondere die Siebdruckeinheit 700 weist beispielsweise zumindest eine Saugtrommel 713 auf. Eine jeweilige Saugtrommel 713 weist in üblicher Weise zumindest eine Greifeinrichtung zur Bogenförderung auf. Die jeweilige Saugtrommel 713 weist bevorzugt zumindest einen Grundkörper auf. Die zumindest eine Greifeinrichtung weist Fixierorgane zur Übernahme und Fixierung der Bogen 02 auf. Die Fixierorgane sind bevorzugt an dem Grundkörper und/oder gemeinsam mit diesem bewegbar angeordnet. Als Fixierorgane sind bevorzugt Greifer, insbesondere Klemm- und/oder Sauggreifer zum Greifen der Bogenkanten angeordnet. Die jeweilige Saugtrommel 713 und insbesondere deren Grundkörper und/oder deren zumindest eine Greifeinrichtung sind um eine Rotationsachse 721 rotierbar angeordnet. Die Saugtrommel 713 weist bevorzugt eine Auflagefläche für Bogen 02 auf. Der zumindest eine Greifer weist bevorzugt zumindest einen bewegbaren Greiffinger auf, der relativ zu einem Grundkörper der Saugtrommel 713 und/oder der Auflagefläche der Saugtrommel 713 bewegbar angeordnet ist. Die Auflagefläche der Saugtrommel 713 weist bevorzugt Saugöffnungen auf, insbesondere zum Ansaugen von Umgebungsluft und/oder Bogen 02. Wenn ein Bogen 02 auf der Auflagefläche der Saugtrommel 713 angeordnet ist, wird dessen Vorderkante bevorzugt von Greifern gehalten. Alternativ oder zusätzlich wird der Bogen 02 nur durch die Saugöffnungen auf der Auflagefläche gehalten.

Die Maschine 01 weist beispielsweise eine Kettenradwelle 714 auf. Beispielsweise weist die Siebdruckeinheit 700 eine Kettenradwelle 714 auf. Dies ist insbesondere dann relevant, wenn entlang des für den Transport von Bogen 02 vorgesehenen Transportwegs nach der Siebdruckeinheit 700 direkt im Anschluss die Bogenauslage 900 folgt. Die Kettenradwelle 714 dient insbesondere einem Umlenken eines insbesondere als Kette ausgebildeten Zugmittels eines Kettenfördersystems 904 bzw. Kettengreifersystems 904.

Wie beschrieben weist die Siebdruckeinheit 700 bevorzugt zumindest einen Ausrichtzylinder 709 auf, der insbesondere als Rotationstransportkörper 709 ausgebildet ist. Der jeweilige Ausrichtzylinder 709 ist bevorzugt als magnetisch wirksamer Ausrichtzylinder 709 ausgebildet. Bevorzugt werden Bogen 02 mittels des jeweiligen Ausrichtzylinders 709 transportiert und dabei die magnetischen Partikel des zuvor aufgetragenen, und noch nicht getrockneten Beschichtungsmittels entsprechend eines von dem jeweiligen Ausrichtzylinder 709 ausgehenden Verlaufsmusters von Magnetfeldlinien orientiert. Bevorzugt weist der jeweilige Ausrichtzylinder 709 im Bereich seines Außenumfangs eine Mehrzahl von ein Magnetfeld bewirkenden Elementen, kurz Magnetelementen, auf, welche insbesondere einer Orientierung zumindest eines Teils der magnetischen oder magnetisierbaren Partikel des auf dem jeweiligen passierenden Bogen 02 aufgebrachten Beschichtungsmittels dienen. Die Magnetelemente können durch Permanentmagnete mit oder ohne Gravur, durch Elektromagnete oder durch Kombinationen ein oder mehrerer Permanent- und/oder ein oder mehrerer Elektromagnete gebildet sein. Diese können entnehmbar und/oder um eine radial verlaufende Achse rotierbar und/oder bzgl. ihrer axialen und/oder Umfangslage einzeln oder in Gruppen justierbar an einem Zylindergrundkörper angeordnet sein und zusammen mit diesem den jeweiligen Ausrichtzylinder 709 bilden. Für den Fall der oben genannten Mehrzahl von Nutzen je Bogen 02 sind - z. B. matrixartig - im Umfang mehrere, z. B. mindestens vier, Reihen von jeweils mehreren, z. B. drei bis acht, insbesondere vier bis sieben, quer zur Transportrichtung T voneinander beabstandeter Magnetelemente vorgesehen bzw. vorsehbar. Durch Fördern der Bogen 02 über den jeweiligen Ausrichtzylinder 709 erfolgt ein Ausrichten bzw. Orientieren der Partikel mittels der durch die Magnetelemente hervorgerufenen Magnetfeldlinien, ggf. auch durch den jeweiligen Bogen 02 hindurch.

Die Magnetelemente können in oder an mehreren, z. B. in drei bis acht, insbesondere in vier bis sieben, axial voneinander beabstandeten und bevorzugt in der axialer Richtung A positionierbaren Ringelementen angeordnet oder anordenbar sein, wobei in oder an diesen Ringelementen wiederum jeweils mindestens ein, bevorzugt mehrere, z. B. zwischen zwei und zwölf, vorteilhaft zwischen fünf und zehn, Magnetelemente in Umfangsrichtung hintereinander und bevorzugt in Umfangsrichtung positionierbar angeordnet oder anordenbar sind. Beispielsweise weist der zumindest eine Ausrichtzylinder 709 zumindest eine Ansaugeinrichtung auf, mittels der ein jeweiliger Bogen 02 auf dem Ausrichtzylinder 709 haltbar ist.

Bevorzugt ist der jeweilige Ausrichtzylinder 709 derart zwischen Gestellseitenwänden, insbesondere Gestellseitenwänden 702; 703 der Siebdruckeinheit 700, gelagert, dass er - insbesondere ohne eine der Gestellseitenwände zu entfernen - für einen Wechsel oder zur Ausführung von Rüstarbeiten entnehmbar ist. Dies meint jedoch ein von einem Zerlegen oder einer Demontage der betreffenden Baueinheit verschiedenes "plan-" oder "betriebsmäßiges" Entnehmen bzw. Wiedereinsetzen. Hierzu ist beispielsweise zumindest antriebsseitig eine drehsteife lösbare Verbindung zwischen Ausrichtzylinder 709 bzw. Zylinderzapfen und einer sich anschließenden Antriebswelle vorgesehen, deren Trennstelle innerhalb der lichten Weite W zwischen den Gestellseitenwänden 702; 703 liegt.

Bevorzugt ist zumindest eine äußere Magneteinrichtung 774 angeordnet, die insbesondere als Simultanmagneteinrichtung 774 ausgebildet ist. Diese zumindest eine äußere Magneteinrichtung 774 ist bevorzugt zumindest im Druckbetrieb ortsfest angeordnet. Diese zumindest eine äußere Magneteinrichtung 774 ist bevorzugt einem jeweiligen Ausrichtzylinder 709 zugeordnet. Diese zumindest eine äußere Magneteinrichtung 774 ist bevorzugt Bestandteil einer Ausrichteinrichtung 771, insbesondere derjenigen Ausrichteinrichtung 771, der auch der zugeordnete Ausrichtzylinder 709 angehört. Die äußere Magneteinrichtung 774 ist bevorzugt derart ausgebildet, dass sie sich über einen Einwirkwinkel um den zugeordneten Ausrichtzylinder 709 erstreckt. Die äußere Magneteinrichtung 774 weist bevorzugt zumindest einen und weiter bevorzugt mehrere Elektromagnete und/oder Permanentmagnete auf und wirkt bevorzugt mit den magnetischen Einrichtungen des jeweiligen Ausrichtzylinders 709 zusammen.

Bevorzugt weist die Maschine 01 zwei Gestellseitenwände 04; 06 eines jeweiligen Gestells 03 auf. Bevorzugt legen diese beiden Gestellseitenwände 04; 06 jeweils eine von zwei inneren Wandebenen W1; W2 fest, durch die weiter bevorzugt eine lichte Weite W des jeweiligen Gestells 03 festgelegt ist.

Eine als Bogendruckmaschine 01 ausgebildete Maschine 01 weist beispielsweise alternativ oder zusätzlich zu einer beschriebenen Siebdruckeinheit 700 zumindest eine insbesondere weitere Druckeinheit 200; 500; 600 auf, die als Bogen-Simultandruckeinheit 200 ausgebildet ist und/oder die als Bogen-Nummerier-Druckeinheit 500 ausgebildet ist und/oder die als Flexo-Druckeinheit 600, insbesondere Bogen-Flexo-Druckeinheit 600 und/oder als Bogenlackiereinheit ausgebildet ist.

Im Folgenden werden zunächst beispielhaft Ausführungsbeispiele von Druckmaschinen 01 beschreiben, die bevorzugt zumindest eine Inspektionseinrichtung 768 und zumindest eine Siebdruckeinheit 700 aufweisen. Der jeweiligen Siebdruckeinheit 700 ist jeweils eine als Bogenanleger 100 ausgebildete Substratzufuhreinrichtung 100 vorangestellt und eine als Mehrfachstapelauslage 900 ausgebildete Bogenauslage 900 nachgeordnet. Die jeweiligen Druckmaschinen 01 sind dahingehend modifizierbar, dass sie zusätzlich oder alternativ zwischen dem Bogenanleger 100 und der Bogenauslage 900 andere und/oder weitere Bogenbearbeitungseinheiten 200; 500; 600 aufweisen können.

Ein erstes Ausführungsbeispiel einer solchen Druckmaschine 01 weist eine Siebdruckeinheit 700 mit drei aneinander angrenzend angeordneten Basismodulen 704 auf. Das entlang des für den Transport von Bogen 02 vorgesehenen Transportwegs erste Basismodul 704 weist einen insbesondere ersten Gegendruckzylinder 708 in seinem ersten Einbaubereich, eine insbesondere erste Blastrommel 712 in seinem zweiten Einbaubereich, einen insbesondere ersten Ausrichtzylinder 709 in seinem dritten Einbaubereich sowie eine insbesondere erste Transfertrommel 711 in seinem vierten Einbaubereich auf. Das entlang des für den Transport von Bogen 02 vorgesehenen Transportwegs zweite Basismodul 704 weist einen insbesondere zweiten Gegendruckzylinder 708 in seinem ersten Einbaubereich, eine insbesondere zweite Blastrommel 712 in seinem zweiten Einbaubereich, einen insbesondere zweiten Ausrichtzylinder 709 in seinem dritten Einbaubereich sowie eine insbesondere zweite Transfertrommel 711 in seinem vierten Einbaubereich auf. Das entlang des für den Transport von Bogen 02 vorgesehenen Transportwegs dritte Basismodul 704 weist eine insbesondere dritte Transfertrommel 711 in seinem ersten Einbaubereich, einen insbesondere dritten Gegendruckzylinder 708 in seinem zweiten Einbaubereich, eine insbesondere dritte Blastrommel 712 in seinem dritten Einbaubereich sowie einen insbesondere dritten Ausrichtzylinder 709 in seinem vierten Einbaubereich auf. Darauffolgend sind nacheinander eine insbesondere erste Saugtrommel 713, eine insbesondere zweite Saugtrommel 713, eine insbesondere vierte Transfertrommel 711 sowie eine Kettenradwelle 714 in einem oder mehreren Zwischengestellen 738 angeordnet.

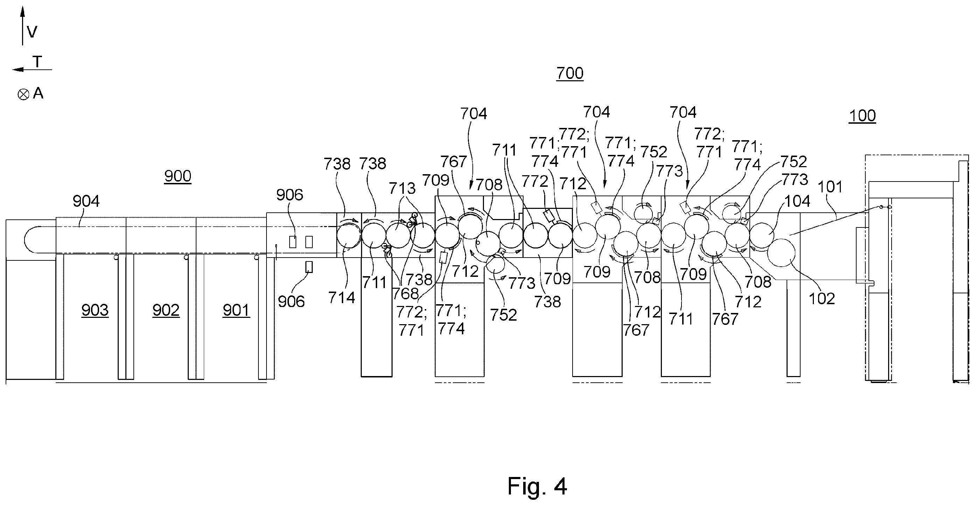

Bevorzugt ist mit jedem Gegendruckzylinder 708 ein jeweiliger Siebdruckformzylinder 752 zusammenwirkend angeordnet. Bevorzugt ist mit jeder Blastrommel 712 eine jeweilige Vorausrichteinrichtung767 zusammenwirkend angeordnet. Bevorzugt ist mit jedem Ausrichtzylinder 709 eine jeweilige Trocknungseinrichtung 772 bzw. Aushärteeinrichtung 772 und/oder eine äußere Magnetreinrichtung 774 zusammenwirkend angeordnet. Bevorzugt ist mit jeder Saugtrommel 713 eine jeweilige Inspektionseinrichtung 768 zusammenwirkend angeordnet. Dieses erste Ausführungsbeispiel einer Siebdruckeinheit 700 erlaubt ein erstes Bedrucken einer Vorderseite von Bogen 02, ein nachfolgendes Ausrichten von dabei aufgetragenen Partikeln, ein nachfolgendes zweites Bedrucken der Vorderseite der Bogen 02, ein nachfolgendes Ausrichten von dabei aufgetragenen Partikeln, ein erstes Bedrucken einer Rückseite der Bogen 02, ein nachfolgendes Ausrichten von dabei aufgetragenen Partikeln sowie eine nachfolgende Inspektion der Vorderseite und der Rückseite der Bogen 02. Der Siebdruckeinheit 700 ist beispielsweise ein Bogenanleger 100 vorangestellt, insbesondere derart, dass ein ihm zugeordneter Rotationstransportkörper 104 mit dem Gegendruckzylinder 708 des ersten Basismoduls 704 dessen erste Übergabestelle bildet. Der Siebdruckeinheit 700 ist beispielsweise eine Bogenauslage 900 nachgeordnet, insbesondere derart, dass die Kettenradwelle 714 in das Bogenfördersystem 904 der Bogenauslage 900 eingebunden ist. (Beispielhaft ist eine Bogendruckmaschine mit einer solchen Siebdruckeinheit 700 schematisch in Fig. 4 dargestellt.)

Ein zweites Ausführungsbeispiel einer solchen Druckmaschine 01 weist eine Siebdruckeinheit 700 mit zwei aneinander angrenzend angeordneten Basismodulen 704 auf. Das entlang des für den Transport von Bogen 02 vorgesehenen Transportwegs erste Basismodul 704 weist einen insbesondere ersten Gegendruckzylinder 708 in seinem ersten Einbaubereich, eine insbesondere erste Blastrommel 712 in seinem zweiten Einbaubereich, einen insbesondere ersten Ausrichtzylinder 709 in seinem dritten Einbaubereich sowie eine insbesondere erste Transfertrommel 711 in seinem vierten Einbaubereich auf. Das entlang des für den Transport von Bogen 02 vorgesehenen Transportwegs zweite Basismodul 704 weist eine insbesondere zweite Transfertrommel 711 in seinem ersten Einbaubereich, einen insbesondere zweiten Gegendruckzylinder 708 in seinem zweiten Einbaubereich, eine insbesondere zweite Blastrommel 712 in seinem dritten Einbaubereich sowie einen insbesondere zweiten Ausrichtzylinder 709 in seinem vierten Einbaubereich auf. Darauffolgend sind nacheinander eine insbesondere erste Saugtrommel 713, eine insbesondere zweite Saugtrommel 713, eine insbesondere dritte Transfertrommel 711 sowie eine Kettenradwelle 714 in einem oder mehreren Zwischengestellen 738 angeordnet.

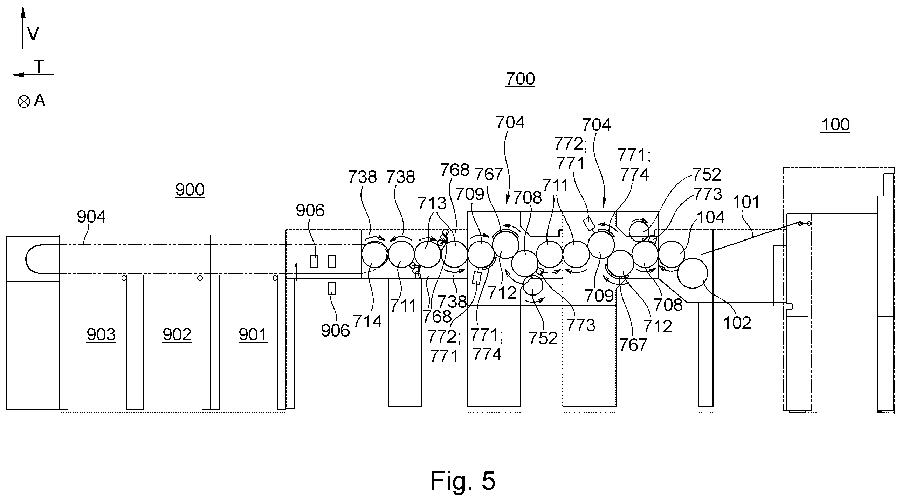

Bevorzugt ist mit jedem Gegendruckzylinder 708 ein jeweiliger Siebdruckformzylinder 752 zusammenwirkend angeordnet. Bevorzugt ist mit jeder Blastrommel 712 eine jeweilige Vorausrichteinrichtung767 zusammenwirkend angeordnet. Bevorzugt ist mit jedem Ausrichtzylinder 709 eine jeweilige Trocknungseinrichtung 772 bzw. Aushärteeinrichtung 772 und/oder eine äußere Magnetreinrichtung 774 zusammenwirkend angeordnet. Bevorzugt ist mit jeder Saugtrommel 713 eine jeweilige Inspektionseinrichtung 768 zusammenwirkend angeordnet. Dieses zweite Ausführungsbeispiel einer Siebdruckeinheit 700 erlaubt ein Bedrucken einer Vorderseite von Bogen 02, ein nachfolgendes Ausrichten von dabei aufgetragenen Partikeln, ein Bedrucken einer Rückseite der Bogen 02, ein nachfolgendes Ausrichten von dabei aufgetragenen Partikeln sowie eine nachfolgende Inspektion der Vorderseite und der Rückseite der Bogen 02. Der Siebdruckeinheit 700 ist beispielsweise ein Bogenanleger 100 vorangestellt, insbesondere derart, dass ein ihm zugeordneter Rotationstransportkörper 104 mit dem Gegendruckzylinder 708 des ersten Basismoduls 704 dessen erste Übergabestelle bildet. Der Siebdruckeinheit 700 ist beispielsweise eine Bogenauslage 900 nachgeordnet, insbesondere derart, dass die Kettenradwelle 714 in das Bogenfördersystem 904 der Bogenauslage 900 eingebunden ist. (Beispielhaft ist eine Bogendruckmaschine mit einer solchen Siebdruckeinheit 700 schematisch in Fig. 5 dargestellt.)

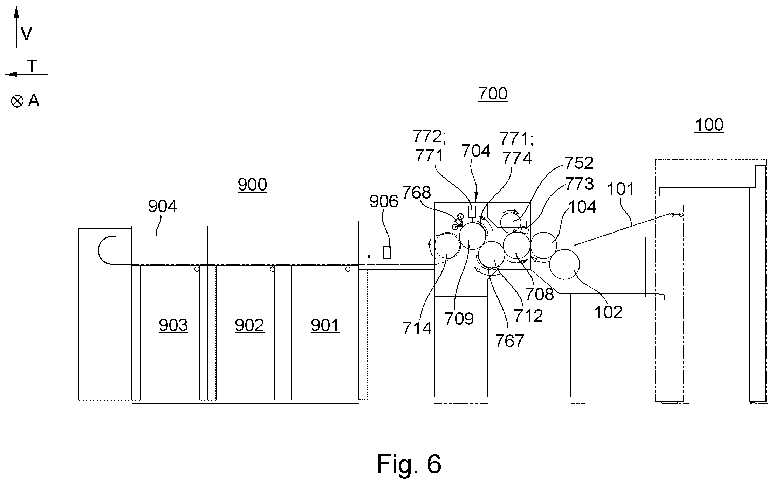

Ein drittes Ausführungsbeispiel einer solchen Druckmaschine 01 weist eine Siebdruckeinheit 700 mit einem Basismodul 704 auf. Das Basismodul 704 weist einen Gegendruckzylinder 708 in seinem ersten Einbaubereich, eine Blastrommel 712 in seinem zweiten Einbaubereich, einen insbesondere ersten Ausrichtzylinder 709 in seinem dritten Einbaubereich sowie eine Kettenradwelle 714 in seinem vierten Einbaubereich auf. Bevorzugt weist der Ausrichtzylinder 709 Saugeinrichtungen auf. Bevorzugt ist mit dem Gegendruckzylinder 708 ein Siebdruckformzylinder 752 zusammenwirkend angeordnet. Bevorzugt ist mit der Blastrommel 712 eine Vorausrichteinrichtung767 zusammenwirkend angeordnet. Bevorzugt ist mit dem Ausrichtzylinder 709 eine Trocknungseinrichtung 772 bzw. Aushärteeinrichtung 772 und/oder eine äußere Magnetreinrichtung 774 sowie eine Inspektionseinrichtung 768 zusammenwirkend angeordnet. Dieses dritte Ausführungsbeispiel einer Siebdruckeinheit 700 erlaubt ein Bedrucken einer Vorderseite von Bogen 02, ein nachfolgendes Ausrichten von dabei aufgetragenen Partikeln sowie eine nachfolgende Inspektion der Vorderseite der Bogen 02. Es bietet bevorzugt die gleiche Funktionalität wie das achte Ausführungsbeispiel, jedoch bei geringerem Platzbedarf. Der Siebdruckeinheit 700 ist beispielsweise ein Bogenanleger 100 vorangestellt, insbesondere derart, dass ein ihm zugeordneter Rotationstransportkörper 104 mit dem Gegendruckzylinder 708 des ersten Basismoduls 704 dessen erste Übergabestelle bildet. Der Siebdruckeinheit 700 ist beispielsweise eine Bogenauslage 900 nachgeordnet, insbesondere derart, dass die Kettenradwelle 714 in das Bogenfördersystem 904 der Bogenauslage 900 eingebunden ist. (Beispielhaft ist eine Bogendruckmaschine mit einer solchen Siebdruckeinheit 700 schematisch in Fig. 6 dargestellt.)

In einer zusätzlichen oder alternativen Weiterbildung weist die Bogenbearbeitungsmaschine 01 bevorzugt zusätzlich zumindest eine weitere Druckeinheit 200; 500; 600 auf, die weiter bevorzugt als Bogen-Simultandruckeinheit 200 ausgebildet ist und/oder die als Bogen-Nummerier-Druckeinheit 500 ausgebildet ist und/oder die als Flexo-Druckeinheit 600 ausgebildet ist.

In einer zusätzlichen oder alternativen Weiterbildung oder Ausbildung weist die Bogenbearbeitungsmaschine 01 bevorzugt zumindest eine für ein Simultandruckverfahren ausgebildete Bogendruckeinheit 200 auf. Eine solche Bogendruckeinheit 200 wird auch Bogen-Simultandruckeinheit 200 oder Bogen-Sammeldruckeinheit 200 genannt. Das Simultandruckverfahren zeichnet sich insbesondere dadurch aus, dass von unterschiedlichen Formzylindern 203; 204; 206; 207 stammende Druckfarbe zunächst auf einem bevorzugt als Übertragungszylinder 201; 202 ausgebildeten Sammelzylinder 201; 202 gesammelt wird und dann gleichzeitig, also simultan, auf einen jeweiligen Bogen 02 übertragen wird. Diese Übertragung erfolgt bevorzugt direkt vom Sammelzylinder 202 aus, der dann bevorzugt auch als Übertragungszylinder 201; 202 ausgebildet ist. Der jeweilige Übertragungszylinder 201; 202 wirkt bevorzugt mit einem jeweiligen Gegendruckzylinder 201; 202 zusammen. Bevorzugt bilden jeweils ein Übertragungszylinder 201; 202 und ein Gegendruckzylinder 201; 202 gemeinsam eine Druckstelle 218, wobei bevorzugt die Bogen 02 durch diese Druckstelle 218 transportiert werden und/oder wobei bevorzugt die Bogen 02 in dieser Druckstelle 218 mit Druckfarbe versehen werden, insbesondere mit den gesammelten Druckfarben. Bevorzugt wirken zwei Zylinder 201; 202 derart zusammen, dass jeder für sich als Übertragungszylinder 201; 202 ausgebildet ist und zugleich als Gegendruckzylinder 201; 202 für den jeweils anderen dieser beiden Zylinder 201; 202 wirkt. Die Bogen-Simultandruckeinheit 200 wird dann beispielsweise auch als Simultan-Doppeldruckeinheit 200 bezeichnet und dient insbesondere dem gleichzeitigen Bedrucken eines jeweiligen Bogens 02 auf zwei Seiten. Bevorzugt ist nur einer dieser Sammelzylinder 201; 202 als Bogentransportzylinder 201; 202 ausgebildet.

Die zumindest eine Bogen-Simultandruckeinheit 200 weist zumindest zwei Formzylinder 203; 204; 206; 207 auf. Bevorzugt ist jeder jeweilige Formzylinder 203; 204; 206; 207 direkt mit einem jeweiligen Gegendruckzylinder 201; 202 in Kontakt stehend und/oder direkt zusammenwirkend und/oder zusammenzuwirken fähig angeordnet. Bevorzugt weist die Bogen-Simultandruckeinheit 200 vier Formzylinder 203; 204; 206; 207 auf, von denen weiter bevorzugt zwei mit einem insbesondere ersten gemeinsamen Sammelzylinder 201; 202 direkt in Kontakt stehen und/oder direkt mit diesem zusammenwirkend und/oder zusammenzuwirken fähig angeordnet sind und von denen weiter bevorzugt zwei andere mit dem anderen, insbesondere zweiten gemeinsamen Sammelzylinder 201; 202 direkt in Kontakt stehend und/oder direkt mit diesem zusammenwirkend und/oder zusammenzuwirken fähig angeordnet sind.

Auf dem jeweiligen Formzylinder 203; 204; 206; 207 der Bogen-Simultandruckeinheit 200 sind unterschiedliche Druckformen, insbesondere Druckplatten anordenbar, beispielsweise abhängig von dem zu druckenden Druckbild. Beispielsweise ist zumindest eine Flachdruckform auf dem jeweiligen Formzylinder 203; 204; 206; 207 anordenbar. Alternativ oder zusätzlich ist beispielsweise zumindest eine Letterset-Druckform auf dem jeweiligen Formzylinder 203; 204; 206; 207 anordenbar. Eine Letterset-Druckform weist nur eine relativ geringe Höhe der farbübertragenden Bereiche im Vergleich zur restlichen Druckplatte auf und ist bezüglich ihres Wirkprinzips mit einer Hochdruckform vergleichbar. Bevorzugt ist zumindest ein Farbwerk 227 je Formzylinder 203; 204; 206; 207 angeordnet.

In einer alternativen oder zusätzlichen Weiterbildung zeichnet sich die Bogen-Simultandruckeinheit 200 bevorzugt dadurch aus, dass sie einen ersten Sammelzylinder 201 und einen zweiten Sammelzylinder 202 aufweist, die direkt miteinander in Kontakt stehend und/oder direkt miteinander zusammenwirkend angeordnet sind und die jeweils eine Rotationsachse 216; 217 aufweisen und dass eine Achsenebene E1 eine Ebene E1 ist, die sowohl die Rotationsachse 216 des ersten Sammelzylinders 201 als auch die Rotationsachse 217 des zweiten Sammelzylinders 202 enthält und dass eine Referenzebene E2 eine Ebene E2 ist, die zumindest eine Rotationsachse 216; 217 eines solchen Sammelzylinders 201; 202 enthält und die eine horizontale Flächennormale aufweist. Diese zwei Sammelzylinder 201; 202 sind bevorzugt zumindest während eines Bearbeitungsvorgangs, insbesondere Druckvorgangs so angeordnet, dass der Schnittwinkel zwischen der Achsenebene E1 einerseits und der Referenzebene E2 andererseits höchstens 45° beträgt, weiter bevorzugt höchstens 30°, noch weiter bevorzugt höchstens 15°, noch weiter bevorzugt höchstens 10°, noch weiter bevorzugt höchstens 5°, noch weiter bevorzugt höchstens 2°, noch weiter bevorzugt höchstens 1°, noch weiter bevorzugt höchstens 0,5° und noch weiter bevorzugt genau 0°.

Bevorzugt weist die jeweilige Bogen-Simultandruckeinheit 200 genau vier Formzylinder 203; 204; 206; 207 auf, von denen genau zwei mit dem ersten Sammelzylinder 201 direkt in Kontakt stehend und/oder direkt zusammenwirkend angeordnet sind und von denen genau zwei andere mit dem zweiten Sammelzylinder 202 direkt in Kontakt stehend und/oder direkt zusammenwirkend angeordnet sind. Bevorzugt ist zumindest ein Farbwerk 227 je Formzylinder 203; 204; 206; 207 angeordnet, das zumindest einen jeweiligen Farbvorrat 231 aufweist, wobei bevorzugt für jeden Farbvorrat 231 zumindest eine Vorratsschnittebene S3 festgelegt ist, die sowohl diesen Farbvorrat 231 schneidet als auch die Rotationsachse 222; 223; 224; 226 desjenigen Formzylinders 203; 204; 206; 207 enthält, der mit demjenigen Farbwerk 227 zusammenwirkt und/oder zusammenzuwirken fähig angeordnet ist, das diesen Farbvorrat 231 enthält und wobei bevorzugt ein Schnittwinkel zwischen der Referenzebene E2 einerseits und zumindest einer solchen Vorratsschnittebene S3 des jeweiligen Farbvorrats 231 andererseits höchstens 45°, weiter bevorzugt höchstens 35°, noch weiter bevorzugt höchstens 25° und noch weiter bevorzugt höchstens 20° beträgt.

Bevorzugt wird eine Bogendruckmaschine 01, die zumindest eine solche als Bogen-Simultandruckeinheit 200 ausgebildete Bogendruckeinheit 200 aufweist. Diese Bogendruckmaschine 01 weist bevorzugt zumindest eine der zumindest einen Bogen-Simultandruckeinheit 200 nachgeordnete Simultandruck-Inspektionseinrichtung 31 zur Inspektion von insbesondere mittels der zumindest einen Bogen-Simultandruckeinheit 200 bedruckten Bogen 02 auf. Unter einer nachgeordnete Simultandruck-Inspektionseinrichtung 31 ist dabei insbesondere eine Inspektionseinrichtung 31 zu verstehen, die zur Inspektion des mittels der zumindest einen Simultandruckeinheit 200 erstellten Druckbilds angeordnet ist. Die Bogendruckmaschine 01 weist bevorzugt zumindest ein der Simultandruck-Inspektionseinrichtung 31 zugeordnetes Bogentransportmittel 39 auf, das einen Abschnitt 38 eines für einen Transport von Bogen 02 vorgesehenen Transportwegs 09 festlegt. Dieser Abschnitt 38 umfasst bevorzugt einen Inspektionsbereich 37 der Simultandruck-Inspektionseinrichtung 31. Die Simultandruck-Inspektionseinrichtung 31 weist bevorzugt zumindest eine insbesondere optische Sensoreinrichtung 32 auf, die in einer Simultan-Inspektionsposition bevorzugt direkt auf den Inspektionsbereich 37 der Simultandruck-Inspektionseinrichtung 31 ausgerichtet angeordnet ist. Bevorzugt ist diese zumindest eine Sensoreinrichtung 32 als Kamera 32 und/oder als Zeilenkamera 32 ausgebildet. Bevorzugt ist das Bogentransportmittel 39 als rotierbares Bogentransportmittel 39 ausgebildet und bildet gemeinsam mit einem der Sammelzylinder 201; 202 eine erste Übergabestelle 41. Weiter bevorzugt ist das Bogentransportmittel 39 als Saugtrommel 39 ausgebildet und bildet gemeinsam mit dem Sammelzylinder 201; 202 die erste Übergabestelle 41. Bevorzugt ist das zumindest eine Bogentransportmittel 39 als rotierbares Bogentransportmittel 39 ausgebildet, dessen Rotationsachse sich in der Querrichtung A erstreckt.

In einer alternativen oder zusätzlichen Weiterbildung zeichnet sich die Bogendruckmaschine 01 bevorzugt dadurch aus, dass zumindest eine Führungseinrichtung 33 der zumindest einen Sensoreinrichtung 32 der Simultandruck-Inspektionseinrichtung 31 angeordnet ist, die einen für eine Bewegung der zumindest einen Sensoreinrichtung 32 der Simultandruck-Inspektionseinrichtung 31 vorgesehenen Sensorstellweg festlegt, der sich von der Simultan-Inspektionsposition zumindest bis zu einer als Wartungsposition ausgebildeten Abstellposition der Sensoreinrichtung 32 der Simultandruck-Inspektionseinrichtung 31 erstreckt. Dieser Sensorstellweg erstreckt sich bevorzugt zumindest zwischen der Simultan-Inspektionsposition und der als Wartungsposition ausgebildeten Abstellposition der Sensoreinrichtung 32 der Simultandruck-Inspektionseinrichtung 31 linear und parallel zu der Querrichtung A, weiter bevorzugt ausschließlich linear. Die zumindest eine Sensoreinrichtung 32 weist bevorzugt eine Erfassungsbreite auf, die zumindest 80 % der maximalen Arbeitsbreite beträgt.

In einer alternativen oder zusätzlichen Weiterbildung zeichnet sich die Bogendruckmaschine 01 bevorzugt dadurch aus, dass sich die Inspektionsposition der Sensoreinrichtung 32 der Simultandruck-Inspektionseinrichtung 31 und die als Wartungsposition ausgebildete Abstellposition der Sensoreinrichtung 32 der Simultandruck-Inspektionseinrichtung 31 in ihrer auf die Querrichtung A bezogenen Lage insbesondere um eine Länge unterscheiden, die zumindest der Arbeitsbreite der Bogendruckmaschine 01 und/oder zumindest der lichten Weite W der Bogendruckmaschine 01 entspricht, weiter bevorzugt zumindest einer Summe aus der lichten Weite W und einer Abmessung einer Gestellseitenwand 04; 06 des Gestells 03 der Bogendruckmaschine 01 in der Querrichtung A im Bereich der Bogen-Simultandruckeinheit 200. Die Führungseinrichtung 33 der zumindest einen Beleuchtungseinrichtung 32 der Simultandruck-Inspektionseinrichtung 31 weist beispielweise eine Schiene und mehrere Rollenelemente auf.

In einer alternativen oder zusätzlichen Weiterbildung zeichnet sich die Bogendruckmaschine 01 bevorzugt dadurch aus, dass die Simultandruck-Inspektionseinrichtung 31 zumindest eine Beleuchtungseinrichtung 34 aufweist, die in einer Beleuchtungsposition bevorzugt direkt auf den Inspektionsbereich 37 der Simultandruck-Inspektionseinrichtung 31 ausgerichtet angeordnet ist. Bevorzugt ist zumindest eine Abstellführungseinrichtung 36 der zumindest einen Beleuchtungseinrichtung 34 der Simultandruck-Inspektionseinrichtung 31 angeordnet, die einen für eine Bewegung der zumindest einen Beleuchtungseinrichtung 34 der Simultandruck-Inspektionseinrichtung 31 vorgesehenen Beleuchtungsstellweg festlegt, der sich von der Beleuchtungsposition zumindest bis zu einer als Wartungsposition ausgebildeten Abstellposition der Beleuchtungseinrichtung 34 der Simultandruck-Inspektionseinrichtung 31 erstreckt. Der Beleuchtungsstellweg erstreckt sich bevorzugt zumindest zwischen der Beleuchtungsposition und der Abstellposition der Beleuchtungseinrichtung 34 der Simultandruck-Inspektionseinrichtung 31 linear und parallel zu der Querrichtung A, weiter bevorzugt ausschließlich linear.

Die Beleuchtungsposition der zumindest einen Beleuchtungseinrichtung 34 der Simultandruck-Inspektionseinrichtung 31 und die Wartungsposition der zumindest einen Beleuchtungseinrichtung 34 der Simultandruck-Inspektionseinrichtung 31 unterscheiden sich in ihrer auf die Querrichtung A bezogenen Lage, insbesondere um eine Länge, die zumindest der Arbeitsbreite der Bogendruckmaschine 01 und/oder zumindest der lichten Weite W der Bogendruckmaschine 01 entspricht, weiter bevorzugt zumindest einer Summe aus der lichten Weite W und einer Abmessung einer Gestellseitenwand 04; 06 des Gestells 03 der Bogendruckmaschine 01 in der Querrichtung A im Bereich der Bogen-Simultandruckeinheit 200. Die Abstellführungseinrichtung 36 der zumindest einen Beleuchtungseinrichtung 34 der Simultandruck-Inspektionseinrichtung 31 weist beispielweise eine Schiene und mehrere Rollenelemente auf.

Bevorzugt weist die Bogendruckmaschine eine weitere Simultandruck-Inspektionseinrichtung 31 auf, um eine gegenüberliegende Seite der Bogen 02 zu inspizieren. Diese weitere Simultandruck-Inspektionseinrichtung 31 ist bevorzugt analog zu der bisher beschriebenen Simultandruck-Inspektionseinrichtung 31 aufgebaut. Bevorzugt ist ein Bogentransportmittel 39 dieser weiteren Simultandruck-Inspektionseinrichtung 31 als rotierbares Bogentransportmittel 39 und weiter bevorzugt als Saugtrommel 39 ausgebildet und bildet gemeinsam mit dem Bogentransportmittel 39 der bisher beschriebenen Simultandruck-Inspektionseinrichtung 31 eine zweite Übergabestelle 42.

Die jeweilige Simultandruck-Inspektionseinrichtung 31 ist bevorzugt als Reflexionsinspektionseinrichtung 31 ausgebildet. Das jeweilige zugeordnete Bogentransportmittel 39 ist bevorzugt als Rotationstransportkörper 39 bzw. als entsprechende Baugruppe 39 ausgebildet.

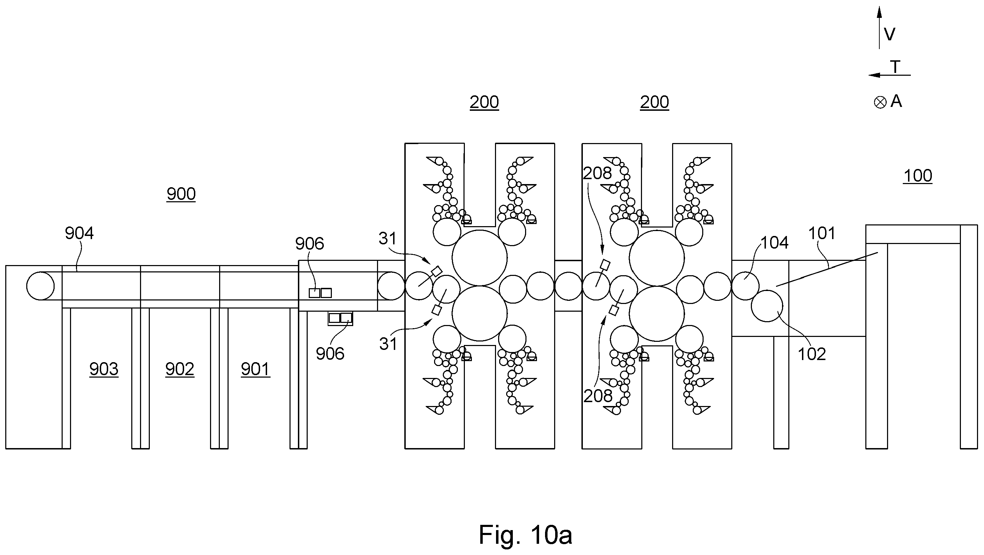

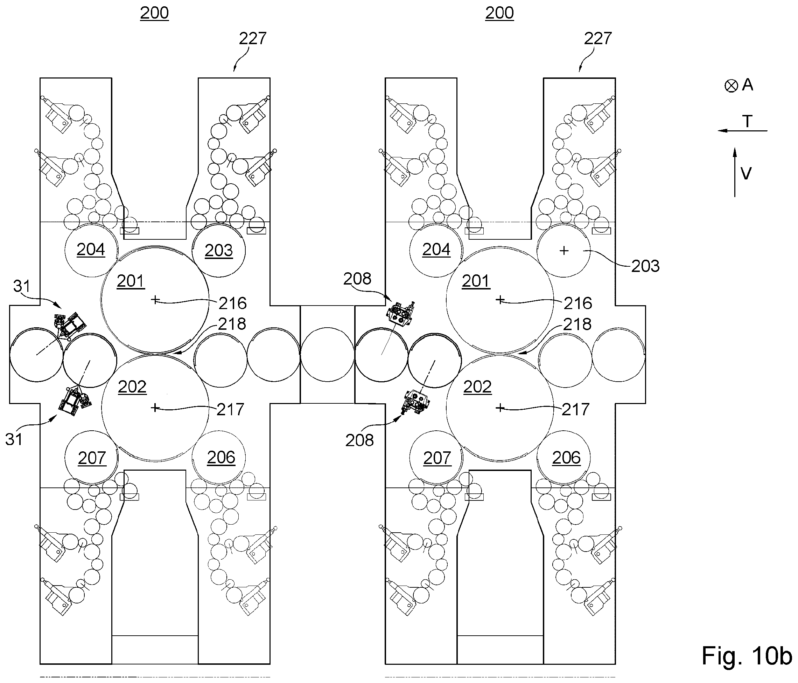

Ein Ausführungsbeispiel einer solchen Bogendruckmaschine 01 weist eine Bogenzufuhreinrichtung 100, zwei Bogen-Simultandruckeinheiten 200 und eine Auslagevorrichtung 900 auf. (Beispielhaft ist dies auch in Fig. 10 dargestellt.) In einem Bereich des für Bogen 02 vorgesehenen Transportwegs zwischen Druckstellen der beiden Bogen-Simultandruckeinheiten 200 ist bevorzugt zumindest eine Trocknungseinrichtung 208 und/oder Aushärteeinrichtungen 208 angeordnet. In einem Bereich des für Bogen 02 vorgesehenen Transportwegs nach der Druckstelle der zweiten Bogen-Simultandruckeinheit 200 und bevorzugt vor der Auslagevorrichtung 900 ist bevorzugt die zumindest eine Simultandruck-Inspektionseinrichtung 31 angeordnet.

In einer zusätzlichen oder alternativen Weiterbildung weist die Maschine 01 bevorzugt zumindest eine für ein Hochdruckverfahren ausgebildete Bogendruckeinheit 500 auf. Eine solche Bogendruckeinheit 500 wird auch Hochdruckeinheit 500 genannt. Das Hochdruckverfahren kommt beispielsweise als Nummerier-Druckverfahren zum Einsatz. Im Folgenden werden Ausführungen zu einer Bogen-Nummerier-Druckeinheit 500 gemacht, die aber auch für allgemeine Hochdruckverfahren entsprechend gelten. In einer zusätzlichen oder alternativen Weiterbildung weist die Bogenbearbeitungsmaschine 01 bevorzugt zumindest eine für ein Nummerier-Druckverfahren ausgebildete Bogendruckeinheit 500 auf. Eine solche Bogendruckeinheit 500 wird auch Bogen-Nummerier-Druckeinheit 500 genannt. Die Bogen-Nummerier-Druckeinheit 500 weist bevorzugt zumindest einen Gegendruckzylinder 501; 502 auf, der bevorzugt als jeweiliger Bogentransportzylinder 501; 502 ausgebildet ist und bevorzugt um eine Rotationsachse 521; 522 rotierbar angeordnet ist. Beispielsweise weist die Bogen-Nummerier-Druckeinheit 500 zwei Zylinder 501; 502 erster Art auf, die weiter bevorzugt als jeweiliger Gegendruckzylinder 501; 502 und/oder als jeweiliger Bogentransportzylinder 501; 502 ausgebildet sind und/oder die direkt miteinander in Kontakt stehen und/oder direkt miteinander zusammenwirkend und/oder direkt zusammenzuwirken fähig angeordnet sind.

Bevorzugt erfolgt eine jeweilige Nummerierung der Bogen 02 und/oder der insbesondere als Wertpapiere ausgebildeten Nutzen der Bogen 02 mittels eines Hochdruckverfahrens, insbesondere unter Einsatz zumindest eines Nummerier-Formzylinders 503; 504; 506; 507, der weiter bevorzugt zumindest ein Nummerierwerk aufweist. Dabei werden bevorzugt einzelne Nummerierwerke eingesetzt, von denen weiter bevorzugt mehrere an einem gemeinsamen Nummerier-Formzylinder 503; 504; 506; 507 angeordnet sind. Bevorzugt weist der jeweilige Nummerier-Formzylinders 503; 504; 506; 507 mehrere Nummerierwerke auf, die in seiner Umfangsrichtung hintereinander an dem jeweiligen Nummerier-Formzylinder 503; 504; 506; 507 angeordnet sind, beispielsweise zumindest zwei oder zumindest vier oder zumindest acht oder zumindest zwölf, und/oder weist der jeweilige Nummerier-Formzylinder 503; 504; 506; 507 mehrere Nummerierwerke auf, die in Querrichtung A nebeneinander an dem jeweiligen Nummerier-Formzylinder 503; 504; 506; 507 angeordnet sind. Das jeweilige zumindest eine Nummerierwerk weist beispielsweise ein Zählwerk mit mehreren Symbolrollen auf, wobei die Symbolrollen jeweils abgesetzte, insbesondere erhabene Bereiche in Form von Symbolen wie beispielsweise Zahlen und/oder Buchstaben aufweisen. Je nach Lage einer jeweiligen Symbolrolle liegt ein anderes Symbol außen, insbesondere auf eine Rotationsachse des jeweiligen Nummerier-Formzylinders 503; 504; 506; 507 bezogen außen. Je nach relativer Lage der einzelnen Symbolrollen ergeben die außenliegenden Symbole des Zählwerks in ihrer Gesamtheit bevorzugt eine eindeutige Seriennummer. Bevorzugt ist zumindest ein Farbwerk 518 je Nummerier-Formzylinder 503; 504; 506; 507 angeordnet. Das zumindest eine Farbwerk 518 versieht bevorzugt die jeweils außenliegenden Symbole der Nummerierwerke dieses jeweiligen Nummerier-Formzylinders 503; 504; 506; 507 bei einem Kontakt mit Druckfarbe. Der jeweilige Nummerier-Formzylinder 503; 504; 506; 507 wird weitergedreht und kommt mit dem jeweiligen Bogen 02 in Kontakt und überträgt die Druckfarbe in Form des Symbols auf den Bogen 02. Bevorzugt wird bis zum nächsten Kontakt dieses Nummerierwerks mit dem Farbwerk 518 die Kombination der Symbole verändert, um beim nächsten Kontakt mit dem entsprechenden Bogen 02 eine andere Markierung übertragen zu können.

Bevorzugt ist jeder jeweilige Nummerier-Formzylinder 503; 504; 506; 507 mit einem jeweiligen Gegendruckzylinder 501; 502 direkt in Kontakt stehend und/oder direkt zusammenwirkend und/oder direkt zusammenzuwirken fähig angeordnet. Bevorzugt sind Gegendruckzylinder 501; 502 der Bogen-Nummerier-Druckeinheit 500 insbesondere unabhängig von ihrer Anzahl auch als Bogentransportzylinder 501; 502 ausgebildet.

Die vorangegangenen und/oder folgenden Ausführungen zur Bogen-Nummerier-Druckeinheit 500 gelten entsprechend auch allgemein für eine Hochdruckeinheit 500 sofern sich daraus keine Widersprüche ergeben, insbesondere mit der Abwandlung, dass Hochdruckformzylinder 503; 504; 506; 507 bevorzugt jeweilige feste Druckformen tragen und dafür keine Nummerierwerke, wie es stattdessen bei Nummerier-Formzylindern 503; 504; 506; 507 der Fall ist.

In einer zusätzlichen oder alternativen Weiterbildung weist die Bogenbearbeitungsmaschine 01 bevorzugt zumindest eine für ein Flexo-Druckverfahren ausgebildete Bogenbearbeitungseinheit 600 und/oder Bogendruckeinheit 600 auf. Eine solche Bogendruckeinheit 600 wird auch Flexo-Druckeinheit 600 genannt. Das Flexo-Druckverfahren kommt beispielsweise als Beschichtungsverfahren, insbesondere Lackierverfahren zum Einsatz. Die Flexo-Druckeinheit 600 weist bevorzugt zumindest einen Gegendruckzylinder 601; 602 auf, der weiter bevorzugt als jeweiliger Bogentransportzylinder 601; 602 ausgebildet ist und bevorzugt um eine Rotationsachse 621; 622 rotierbar angeordnet ist. Weiter bevorzugt weist die Flexo-Druckeinheit 600 zwei Gegendruckzylinder 601; 602 auf, die weiter bevorzugt als jeweiliger Bogentransportzylinder 601; 602 ausgebildet sind und/oder die direkt miteinander in Kontakt stehend und/oder direkt miteinander zusammenwirkend und/oder direkt zusammenzuwirken fähig angeordnet sind. Bevorzugt sind Gegendruckzylinder 601; 602 der Flexo-Druckeinheit 600 insbesondere unabhängig von ihrer Anzahl auch als Bogentransportzylinder 601; 602 ausgebildet.

Bevorzugt weist die Flexo-Druckeinheit 600 zumindest einen Flexo-Formzylinder 603; 604; 606; 607 auf. Bevorzugt ist zumindest ein Farbwerk 618 je Flexo-Formzylinder 603; 604; 606; 607 angeordnet. Unter einem Flexo-Formzylinder 603; 604; 606; 607 ist insbesondere ein für ein Flexo-Druckverfahren vorgesehener Formzylinder 603; 604; 606; 607 zu verstehen und/oder ist insbesondere ein Formzylinder 603; 604; 606; 607 zu verstehen, der dazu ausgebildet ist, zumindest eine bevorzugt wechselbare Flexo-Druckform zu tragen, insbesondere auf seiner Mantelfläche. Bevorzugt ist jeder jeweilige Flexo-Formzylinder 603; 604; 606; 607 mit einem jeweiligen Gegendruckzylinder 601; 602 direkt in Kontakt stehend und/oder direkt zusammenwirkend und/oder direkt zusammenzuwirken fähig angeordnet.

### Bezugszeichenliste

- 01: Maschine, Bogenbearbeitungsmaschine, Beschichtungsmaschine, Druckmaschine, Bogendruckmaschine, Inspektionsmaschine, Formgebungsmaschine, Wertpapierhandhabungsmaschine, Wertpapierinspektionsmaschine, Wertpapierdruckmaschine, Wertpapier-Bogendruckmaschine, Bogen-Rotationsdruckmaschine
- 02: Substrat, Bogen
- 03: Gestell
- 04: Gestellseitenwand
- 05: -
- 06: Gestellseitenwand
- 07: Bogentransportmittel, Rotationstransportkörper
- 08: Inspektionseinrichtung, Reflexionsinspektionseinrichtung
- 09: Transportweg
- 10: -
- 11: Abschnitt
- 12: Inspektionsbereich
- 13: Sensoreinrichtung, Kamera, Zeilenkamera
- 14: Beleuchtungseinrichtung, erste
- 15: -
- 16: Beleuchtungseinrichtung, zweite
- 17: Schwenkachse, erste
- 18: Schwenkführungseinrichtung (14)
- 19: Halteelement, erstes
- 20: -
- 21: Führungseinrichtung (13)
- 22: Abstellführungseinrichtung (14)
- 23: Abstellführungseinrichtung (16)
- 24: Schiene (21)
- 25: -
- 26: Schiene (21)
- 27: -
- 28: -
- 29: -
- 30: -
- 31: Simultandruck-Inspektionseinrichtung, Reflexionsinspektionseinrichtung (200)
- 32: Sensoreinrichtung, Kamera, Zeilenkamera
- 33: Führungseinrichtung (31)
- 34: Beleuchtungseinrichtung (31)
- 35: -
- 36: Abstellführungseinrichtung (34)
- 37: Inspektionsbereich (31)
- 38: Abschnitt (09)
- 39: Bogentransportmittel, Rotationstransportkörper, Baugruppe, Saugtrommel
- 40: -
- 41: Übergabestelle, erste
- 42: Übergabestelle, zweite

- 100: Substratzufuhreinrichtung, Bogenzufuhreinrichtung, Bogenanleger
- 101: Bändertisch, Förderstrecke
- 102: Rotationstransportkörper, Bogentransportmittel, Annahmetrommel
- 103: -
- 104: Rotationstransportkörper

- 200: Bogenbearbeitungseinheit, Bogendruckeinheit, Bogen-Simultandruckeinheit, Simultan-Doppeldruckeinheit, Bogen-Sammeldruckeinheit
- 201: Zylinder, Hauptzylinder, Sammelzylinder, Übertragungszylinder, Gegendruckzylinder, Bogentransportzylinder
- 202: Zylinder, Hauptzylinder, Sammelzylinder, Übertragungszylinder, Gegendruckzylinder, Bogentransportzylinder
- 203: Zylinder, Formzylinder, Flachdruckformzylinder
- 204: Zylinder, Formzylinder, Flachdruckformzylinder
- 205: -
- 206: Zylinder, Formzylinder, Flachdruckformzylinder
- 207: Zylinder, Formzylinder, Flachdruckformzylinder
- 208: Trocknungseinrichtung, Aushärteeinrichtung

- 216: Rotationsachse
- 217: Rotationsachse
- 218: Druckstelle

- 227: Farbwerk

- 500: Bogenbearbeitungseinheit, Bogendruckeinheit, Bogen-Nummerier-Druckeinheit, Hochdruckeinheit
- 501: Zylinder, Hauptzylinder, Gegendruckzylinder, Bogentransportzylinder
- 502: Zylinder, Hauptzylinder, Gegendruckzylinder, Bogentransportzylinder
- 503: Zylinder, Formzylinder, Offsetdruckformzylinder, Nummerier-Formzylinder, Hochdruckformzylinder
- 504: Zylinder, Formzylinder, Offsetdruckformzylinder, Nummerier-Formzylinder, Hochdruckformzylinder
- 505: -
- 506: Zylinder, Formzylinder, Offsetdruckformzylinder, Nummerier-Formzylinder, Hochdruckformzylinder
- 507: Zylinder, Formzylinder, Offsetdruckformzylinder, Nummerier-Formzylinder, Hochdruckformzylinder
- 518: Farbwerk
- 519: -
- 520: -
- 521: Rotationsachse, Achsenlage
- 522: Rotationsachse, Achsenlage

- 600: Bogenbearbeitungseinheit, Bogendruckeinheit, Flexo-Druckeinheit, Hochdruckeinheit
- 601: Zylinder, Hauptzylinder, Gegendruckzylinder, Bogentransportzylinder
- 602: Zylinder, Hauptzylinder, Gegendruckzylinder, Bogentransportzylinder
- 603: Zylinder, Formzylinder, Flexo-Formzylinder
- 604: Zylinder, Formzylinder, Flexo-Formzylinder
- 605: -
- 606: Zylinder, Formzylinder, Flexo-Formzylinder
- 607: Zylinder, Formzylinder, Flexo-Formzylinder

- 618: Farbwerk
- 619: -
- 620: -
- 621: Rotationsachse, Achsenlage
- 622: Rotationsachse, Achsenlage

- 700: Bogenbearbeitungseinheit, Bogendruckeinheit, Siebdruckeinheit
- 701: Gestell
- 702: Gestellseitenwand
- 703: Gestellseitenwand
- 704: Basismodul
- 705: -
- 706: -
- 707: -
- 708: Rotationstransportkörper, Bogentransportmittel, Baugruppe, Gegendruckzylinder
- 709: Rotationstransportkörper, Bogentransportmittel, Baugruppe, Ausrichtzylinder
- 710: -
- 711: Rotationstransportkörper, Bogentransportmittel, Baugruppe, Transfertrommel
- 712: Rotationstransportkörper, Bogentransportmittel, Baugruppe, Blastrommel
- 713: Rotationstransportkörper, Bogentransportmittel, Baugruppe, Saugtrommel
- 714: Rotationstransportkörper, Bogentransportmittel, Baugruppe, Kettenradwelle

- 738: Zwischenmodul

- 752: Siebdruckformzylinder

- 767: Vorausrichteinrichtung, Vorausrichtmagnet
- 768: Inspektionseinrichtung, Reflexionsinspektionseinrichtung
- 769: -
- 770: -
- 771: Ausrichteinrichtung
- 772: Trocknungseinrichtung, Aushärteeinrichtung, Strahlungstrockner, UV-Trockner, LED-Trockner, UV-LED-Trockner
- 773: Ganzbogenkontrolleinrichtung
- 774: Magneteinrichtung, Simultanmagneteinrichtung, äußere

- 900: Aggregat, Auslagevorrichtung, Bogenauslage, Mehrfachstapelauslage, Doppelstapelauslage, Dreifachstapelauslage, Vierfachstapelauslage
- 901: Abgabestation, Stapelauslage
- 902: Abgabestation, Stapelauslage
- 903: Abgabestation, Stapelauslage
- 904: Bogenfördersystem, Kettenfördersystem, Kettengreifersystem
- 905: -
- 906: Trockeneinrichtung, Aushärteeinrichtung, Strahlungstrockner, UV-Trockner

- A: Querrichtung
- E1: Ebene, Achsenebene
- E2: Ebene, Referenzebene
- S3: Vorratsschnittebene
- T: Transportrichtung
- V: Richtung, vertikal
- W: lichte Weite
- W1: Wandebene
- W2: Wandebene

## Patentansprüche

1. Maschine (01) zur Handhabung von Bogen (02), wobei die Maschine (01) zumindest eine Inspektionseinrichtung (08; 768) zur Inspektion von Bogen (02) aufweist und wobei die Maschine (01) zumindest ein Bogentransportmittel (07; 708; 709; 711; 712; 713; 714) aufweist, das einen Abschnitt (11) eines für einen Transport von Bogen (02) vorgesehenen Transportwegs (09) festlegt und wobei dieser Abschnitt (11) einen Inspektionsbereich (12) umfasst und wobei die Inspektionseinrichtung (08; 768) zumindest eine Sensoreinrichtung (13) aufweist, die auf den Inspektionsbereich (12) ausgerichtet angeordnet ist und wobei die Inspektionseinrichtung (08; 768) zumindest eine erste Beleuchtungseinrichtung (14) aufweist, die auf den Inspektionsbereich (12) ausgerichtet angeordnet ist und wobei die Maschine (01) zumindest eine Ausrichteinrichtung (771) zum Ausrichten von in einem optisch variablen und auf dem jeweiligen Bogen (02) aufgebrachten Beschichtungsmittel enthaltenen und für eine optische Variabilität verantwortlichen Partikeln aufweist und wobei die Inspektionseinrichtung (08; 768) zumindest eine zweite Beleuchtungseinrichtung (16) aufweist, die auf den Inspektionsbereich (12) ausgerichtet angeordnet ist, **dadurch gekennzeichnet, dass** die zumindest eine erste Beleuchtungseinrichtung (14) zur Beleuchtung des Inspektionsbereichs (12) mit zumindest mehrheitlich gerichtetem Licht ausgebildet ist und dass die erste Beleuchtungseinrichtung (14) zum Wechsel zwischen unterschiedlichen Beleuchtungspositionen um eine erste Schwenkachse (17) schwenkbar angeordnet ist und dass die erste Schwenkachse (17) den Inspektionsbereich (12) schneidet oder einen kleinsten Abstand zu dem Inspektionsbereich (12) aufweist, der höchstens 20 mm beträgt und dass die zumindest eine zweite Beleuchtungseinrichtung (16) zur Beleuchtung des Inspektionsbereichs (12) mit zumindest mehrheitlich diffusem Licht ausgebildet ist.

2. Maschine nach Anspruch 1, **dadurch gekennzeichnet, dass** die zumindest eine erste Beleuchtungseinrichtung (14) als Einrichtung zum Aussenden von elektromagnetischer Strahlung im sichtbaren Bereich und/oder als Einrichtung zum Aussenden von elektromagnetischer Strahlung im Infrarotbereich und/oder als Einrichtung zum Aussenden von elektromagnetischer Strahlung im ultravioletten Bereich ausgebildet ist.

3. Maschine nach Anspruch 1 oder 2, **dadurch gekennzeichnet, dass** die erste Beleuchtungseinrichtung (14) in einem von zwei Endlagen begrenzten ersten Winkelbereich um die erste Schwenkachse (17) schwenkbar angeordnet ist und dass dieser erste Winkelbereich sich über zumindest 5° erstreckt.

4. Maschine nach Anspruch 1 oder 2 oder 3, **dadurch gekennzeichnet, dass** die erste Beleuchtungseinrichtung (14) unabhängig von der zumindest einen Sensoreinrichtung (13) um die erste Schwenkachse (17) schwenkbar angeordnet ist.

5. Maschine nach Anspruch 1 oder 2 oder 3 oder 4, **dadurch gekennzeichnet, dass** die Maschine (01) als Bogendruckmaschine (01) ausgebildet ist.

6. Maschine nach Anspruch 1 oder 2 oder 3 oder 4 oder 5, **dadurch gekennzeichnet, dass** die Maschine (01) eine Mehrfachstapelauslage (900) aufweist.

7. Maschine nach Anspruch 1 oder 2 oder 3 oder 4 oder 5 oder 6, **dadurch gekennzeichnet, dass** die Maschine (01) zumindest eine Siebdruckeinheit (700) aufweist.

8. Maschine nach Anspruch 1 oder 2 oder 3 oder 4 oder 5 oder 6 oder 7, **dadurch gekennzeichnet, dass** die zumindest eine Sensoreinrichtung (13) als optische Sensoreinrichtung (13) oder als Kamera (13) oder als Zeilenkamera (13) ausgebildet ist.

9. Maschine nach Anspruch 1 oder 2 oder 3 oder 4 oder 5 oder 6 oder 7 oder 8, **dadurch gekennzeichnet, dass** das Bogentransportmittel (07; 708; 709; 711; 712; 713; 714) als Rotationstransportkörper (07; 708; 709; 711; 712; 713; 714) ausgebildet ist.

10. Maschine nach Anspruch 1 oder 2 oder 3 oder 4 oder 5 oder 6 oder 7 oder 8 oder 9, **dadurch gekennzeichnet, dass** das Bogentransportmittel (07; 708; 709; 711; 712; 713; 714) als Saugtrommel (713) ausgebildet ist.

11. Maschine nach Anspruch 1 oder 2 oder 3 oder 4 oder 5 oder 6 oder 7 oder 8 oder 9 oder 10, **dadurch gekennzeichnet, dass** die Maschine (01) eine maximale Arbeitsbreite von zumindest 50 cm oder zumindest 75 cm oder zumindest 100 cm aufweist.

12. Maschine nach Anspruch 1 oder 2 oder 3 oder 4 oder 5 oder 6 oder 7 oder 8 oder 9 oder 10 oder 11, **dadurch gekennzeichnet, dass** entlang des für den Transport von Bogen (02) vorgesehenen Transportwegs (09) an jeder Stelle eine Transportrichtung (T) festgelegt ist und eine Querrichtung (A) eine an jeder Stelle des für den Transport von Bogen (02) vorgesehenen Transportwegs (09) zur Transportrichtung (T) orthogonale horizontale Richtung (A) ist und dass die erste Schwenkachse (17) parallel zu der Querrichtung (A) orientiert ist.

13. Maschine nach Anspruch 12, **dadurch gekennzeichnet, dass** zumindest eine Führungseinrichtung (21) der zumindest einen Sensoreinrichtung (13) angeordnet ist, die einen für eine Bewegung der zumindest einen Sensoreinrichtung (13) vorgesehenen Sensorstellweg festlegt, der sich von der Inspektionsposition zumindest bis zu einer als Wartungsposition ausgebildeten ersten Abstellposition erstreckt und dass sich der Sensorstellweg zumindest zwischen der Inspektionsposition und der ersten Abstellposition orthogonal zu der Querrichtung (A) erstreckt.

14. Maschine nach Anspruch 13, **dadurch gekennzeichnet, dass** sich der Sensorstellweg auf einer Länge von zumindest 10 cm oder zumindest 20 cm oder zumindest 30 cm oder zumindest 40 cm oder zumindest 50 cm orthogonal zu der Querrichtung (A) erstreckt.

15. Maschine nach Anspruch 1 oder 2 oder 3 oder 4 oder 5 oder 6 oder 7 oder 8 oder 9 oder 10 oder 11 oder 12 oder 13 oder 14, **dadurch gekennzeichnet, dass** die zumindest eine optische Sensoreinrichtung (13) eine Erfassungsbreite aufweist, die zumindest 80 % oder zumindest 90 % oder zumindest 95 % der maximalen Arbeitsbreite der Maschine (01) beträgt.

## Claims

1. Machine (01) for handling sheets (02), wherein the machine (01) has at least one inspection device (08; 768) for inspecting sheets (02) and wherein the machine (01) has at least one sheet transport means (07; 708; 709; 711; 712; 713; 714) which defines a section (11) of a transport path (09) provided for transporting sheets (02) and wherein this section (11) comprises an inspection region (12) and wherein the inspection device (08; 768) has at least one sensor device (13) which is arranged oriented toward the inspection region (12) and wherein the inspection device (08; 768) has at least one first illumination device (14) which is arranged oriented toward the inspection region (12) and wherein the machine (01) has at least one orienting device (771) for orienting particles which are contained in an optically variable coating agent applied on the respective sheet (02) and which are responsible for an optical variability and wherein the inspection device (08; 768) has at least one second illumination device (16) which is arranged oriented toward the inspection region (12), **characterized in that** the at least one first illumination device (14) is designed for illuminating the inspection region (12) with at least predominantly directed light and **in that** the first illumination device (14) is arranged pivotably about a first pivot axis (17) for changing between different illumination positions and **in that** the first pivot axis (17) intersects the inspection region (12) or has a smallest distance from the inspection region (12) which amounts to at most 20 mm and **in that** the at least one second illumination device (16) is designed for illuminating the inspection region (12) with at least predominantly diffuse light.

2. Machine according to claim 1, **characterized in that** the at least one first illumination device (14) is designed as a device for emitting electromagnetic radiation in the visible range and/or as a device for emitting electromagnetic radiation in the infrared range and/or as a device for emitting electromagnetic radiation in the ultraviolet range.

3. Machine according to claim 1 or 2, **characterized in that** the first illumination device (14) is arranged pivotably about the first pivot axis (17) in a first angular range delimited by two end positions and **in that** this first angular range extends over at least 5°.

4. Machine according to claim 1 or 2 or 3, **characterized in that** the first illumination device (14) is arranged pivotably about the first pivot axis (17) independently of the at least one sensor device (13).

5. Machine according to claim 1 or 2 or 3 or 4, **characterized in that** the machine (01) is designed as a sheet-fed printing machine (01).

6. Machine according to claim 1 or 2 or 3 or 4 or 5, **characterized in that** the machine (01) has a multiple-pile delivery (900).

7. Machine according to claim 1 or 2 or 3 or 4 or 5 or 6, **characterized in that** the machine (01) has at least one screen printing unit (700).

8. Machine according to claim 1 or 2 or 3 or 4 or 5 or 6 or 7, **characterized in that** the at least one sensor device (13) is designed as an optical sensor device (13) or as a camera (13) or as a line camera (13).

9. Machine according to claim 1 or 2 or 3 or 4 or 5 or 6 or 7 or 8, **characterized in that** the sheet transport means (07; 708; 709; 711; 712; 713; 714) is designed as a rotational transport body (07; 708; 709; 711; 712; 713; 714).

10. Machine according to claim 1 or 2 or 3 or 4 or 5 or 6 or 7 or 8 or 9, **characterized in that** the sheet transport means (07; 708; 709; 711; 712; 713; 714) is designed as a suction drum (713).

11. Machine according to claim 1 or 2 or 3 or 4 or 5 or 6 or 7 or 8 or 9 or 10, **characterized in that** the machine (01) has a maximum working width of at least 50 cm or at least 75 cm or at least 100 cm.

12. Machine according to claim 1 or 2 or 3 or 4 or 5 or 6 or 7 or 8 or 9 or 10 or 11, **characterized in that**, along the transport path (09) provided for transporting sheets (02), a transport direction (T) is defined at every location and a transverse direction (A) is a horizontal direction (A) that is orthogonal to the transport direction (T) at every location of the transport path (09) provided for transporting sheets (02) and **in that** the first pivot axis (17) is oriented parallel to the transverse direction (A).

13. Machine according to claim 12, **characterized in that** at least one guide device (21) of the at least one sensor device (13) is arranged, which defines a sensor displacement path provided for a movement of the at least one sensor device (13), which extends from the inspection position at least up to a first parking position designed as a maintenance position and **in that** the sensor displacement path extends, at least between the inspection position and the first parking position, orthogonally to the transverse direction (A).

14. Machine according to claim 13, **characterized in that** the sensor displacement path extends over a length of at least 10 cm or at least 20 cm or at least 30 cm or at least 40 cm or at least 50 cm orthogonally to the transverse direction (A).

15. Machine according to claim 1 or 2 or 3 or 4 or 5 or 6 or 7 or 8 or 9 or 10 or 11 or 12 or 13 or 14, **characterized in that** the at least one optical sensor device (13) has a detection width which amounts to at least 80 % or at least 90 % or at least 95 % of the maximum working width of the machine (01).

## Revendications

1. Machine (01) pour la manipulation de feuilles (02), la machine (01) présentant au moins un dispositif d'inspection (08; 768) pour l'inspection de feuilles (02) et la machine (01) présentant au moins un moyen de transport de feuilles (07; 708; 709; 711; 712; 713; 714) qui définit un tronçon (11) d'un trajet de transport (09) prévu pour un transport de feuilles (02) et ce tronçon (11) comprenant une zone d'inspection (12) et le dispositif d'inspection (08; 768) présentant au moins un dispositif capteur (13) qui est disposé de manière orientée sur la zone d'inspection (12) et le dispositif d'inspection (08; 768) présentant au moins un premier dispositif d'éclairage (14) qui est disposé de manière orientée sur la zone d'inspection (12) et la machine (01) présentant au moins un dispositif d'orientation (771) pour orienter des particules contenues dans un agent de revêtement optiquement variable et appliqué sur la feuille respective (02) et responsables d'une variabilité optique et le dispositif d'inspection (08; 768) présentant au moins un deuxième dispositif d'éclairage (16) qui est disposé de manière orientée sur la zone d'inspection (12), **caractérisée en ce que** le au moins un premier dispositif d'éclairage (14) est réalisé pour éclairer la zone d'inspection (12) avec une lumière au moins majoritairement dirigée et **en ce que** le premier dispositif d'éclairage (14) est monté pivotant autour d'un premier axe de pivotement (17) pour changer entre différentes positions d'éclairage et **en ce que** le premier axe de pivotement (17) coupe la zone d'inspection (12) ou présente une distance minimale par rapport à la zone d'inspection (12) qui est d'au plus 20 mm et **en ce que** le au moins un deuxième dispositif d'éclairage (16) est réalisé pour éclairer la zone d'inspection (12) avec une lumière au moins majoritairement diffuse.

2. Machine selon la revendication 1, **caractérisée en ce que** le au moins un premier dispositif d'éclairage (14) est réalisé sous forme de dispositif d'émission de rayonnement électromagnétique dans le domaine visible et/ou sous forme de dispositif d'émission de rayonnement électromagnétique dans le domaine infrarouge et/ou sous forme de dispositif d'émission de rayonnement électromagnétique dans le domaine ultraviolet.

3. Machine selon la revendication 1 ou 2, **caractérisée en ce que** le premier dispositif d'éclairage (14) est monté pivotant autour du premier axe de pivotement (17) dans une première plage angulaire délimitée par deux positions extrêmes et **en ce que** cette première plage angulaire s'étend sur au moins 5°.

4. Machine selon la revendication 1 ou 2 ou 3, **caractérisée en ce que** le premier dispositif d'éclairage (14) est monté pivotant autour du premier axe de pivotement (17) indépendamment du au moins un dispositif capteur (13).

5. Machine selon la revendication 1 ou 2 ou 3 ou 4, **caractérisée en ce que** la machine (01) est réalisée sous forme de machine d'impression de feuilles (01).

6. Machine selon la revendication 1 ou 2 ou 3 ou 4 ou 5, **caractérisée en ce que** la machine (01) présente une réception à piles multiples (900).

7. Machine selon la revendication 1 ou 2 ou 3 ou 4 ou 5 ou 6, **caractérisée en ce que** la machine (01) présente au moins une unité de sérigraphie (700).

8. Machine selon la revendication 1 ou 2 ou 3 ou 4 ou 5 ou 6 ou 7, **caractérisée en ce que** le au moins un dispositif capteur (13) est réalisé sous forme de dispositif capteur optique (13) ou sous forme de caméra (13) ou sous forme de caméra linéaire (13).

9. Machine selon la revendication 1 ou 2 ou 3 ou 4 ou 5 ou 6 ou 7 ou 8, **caractérisée en ce que** le moyen de transport de feuilles (07; 708; 709; 711; 712; 713; 714) est réalisé sous forme de corps de transport rotatif (07; 708; 709; 711; 712; 713; 714).

10. Machine selon la revendication 1 ou 2 ou 3 ou 4 ou 5 ou 6 ou 7 ou 8 ou 9, **caractérisée en ce que** le moyen de transport de feuilles (07; 708; 709; 711; 712; 713; 714) est réalisé sous forme de tambour aspirant (713).

11. Machine selon la revendication 1 ou 2 ou 3 ou 4 ou 5 ou 6 ou 7 ou 8 ou 9 ou 10, **caractérisée en ce que** la machine (01) présente une largeur de travail maximale d'au moins 50 cm ou d'au moins 75 cm ou d'au moins 100 cm.

12. Machine selon la revendication 1 ou 2 ou 3 ou 4 ou 5 ou 6 ou 7 ou 8 ou 9 ou 10 ou 11, **caractérisée en ce que**, le long du trajet de transport (09) prévu pour le transport de feuilles (02), une direction de transport (T) est définie en chaque endroit et une direction transversale (A) est une direction horizontale (A) orthogonale à la direction de transport (T) en chaque endroit du trajet de transport (09) prévu pour le transport de feuilles (02) et **en ce que** le premier axe de pivotement (17) est orienté parallèlement à la direction transversale (A).

13. Machine selon la revendication 12, **caractérisée en ce qu'**au moins un dispositif de guidage (21) du au moins un dispositif capteur (13) est disposé, qui définit un trajet de déplacement du capteur prévu pour un déplacement du au moins un dispositif capteur (13), lequel s'étend de la position d'inspection au moins jusqu'à une première position de rangement réalisée sous forme de position de maintenance et **en ce que** le trajet de déplacement du capteur s'étend, au moins entre la position d'inspection et la première position de rangement, orthogonalement à la direction transversale (A).

14. Machine selon la revendication 13, **caractérisée en ce que** le trajet de déplacement du capteur s'étend sur une longueur d'au moins 10 cm ou d'au moins 20 cm ou d'au moins 30 cm ou d'au moins 40 cm ou d'au moins 50 cm orthogonalement à la direction transversale (A).

15. Machine selon la revendication 1 ou 2 ou 3 ou 4 ou 5 ou 6 ou 7 ou 8 ou 9 ou 10 ou 11 ou 12 ou 13 ou 14, **caractérisée en ce que** le au moins un dispositif capteur optique (13) présente une largeur de détection qui représente au moins 80 % ou au moins 90 % ou au moins 95 % de la largeur de travail maximale de la machine (01).
